# EUROPÄISCHE PATENTANMELDUNG

(11) **EP 3 766 722 A2**
(43) Veröffentlichungstag der Anmeldung: **20.01.2021**
(21) Anmeldenummer: 20186501.1
(22) Anmeldetag: 17.07.2020
(51) Int. Cl.: B60L 9/08, B60L 50/53, B60L 5/00

(54) **PHASENLAGENDETEKTION BEIM PASSIEREN VON TRENNSTELLEN IN EINER STROMVERSORGUNG FÜR SCHIENENFAHRZEUGE**

(30) Priorität: 19.07.2019 DE 102019210768
(71) Anmelder: Bombardier Transportation GmbH, 10785 Berlin (DE)
(72) Erfinder: Maaß, Jörg-Torsten, 16515 Oranienburg (DE)
(74) Vertreter: Patentanwälte Bressel und Partner mbB

(57) **Zusammenfassung**

Die Erfindung betrifft ein Verfahren zum Betreiben eines Schienenfahrzeugs (10) beim Passieren von Trennstellen (22) in einer fahrzeugexternen Stromversorgung, wobei das Schienenfahrzeug (10) umfasst:
- wenigstens einen Stromabnehmer (30) zum Aufnehmen elektrischer Energie aus der Stromversorgung (10);
- einen Haupttransformator (42) zum Transformieren der aufgenommenen elektrischen Energie, die an einer Primärseite des Haupttransformators (42) bereitgestellt ist, auf ein gewünschtes Spannungsniveau an einer Sekundärseite des Haupttransformators (42);
- eine Detektionseinrichtung (31), die dazu eingerichtet, eine Phasenlage eines von der Stromversorgung geführten Wechselstroms zu detektieren;
wobei das Verfahren umfasst:
- Detektieren der Phasenlage mit der Detektionseinrichtung (31) in einem Abschnitt der Stromversorgung (15), der nach einer Trennstelle (22) liegt; und
- Einstellen der Phasenlage einer primärseitigen Spannung des Haupttransformators (42) in Abhängigkeit der detektierten Phasenlage.

Ferner betrifft die Erfindung ein Schienenfahrzeug (10).

## Beschreibung

Die Erfindung betrifft ein Verfahren zum Betreiben eines Schienenfahrzeugs beim Passieren von Trennstellen in einer fahrzeugexternen Stromversorgung und ein Schienenfahrzeug, wobei eine Detektionseinrichtung zum Detektieren einer Phasenlage zum Einsatz kommt.

Das Versorgen von Schienenfahrzeugen mit elektrischer Energie mittels einer fahrzeugexternen Stromversorgung ist bekannt. Die Stromversorgung kann zum Beispiel eine Stromschiene oder eine Oberleitungsanlage umfassen, an der ein stromführender Fahrdraht montiert ist. Die Schienenfahrzeuge können in ebenfalls bekannter Weise geeignete Stromabnehmer umfassen, zum Beispiel mit einem Pantografen oder einem seitlich montierten Stromschienen-Gegenstücke.

Oftmals erfolgt die Stromversorgung in Form von einphasigem Wechselstrom. Um ein Versorgungsstromnetz (zum Beispiel ein sogenanntes Landesnetz oder allgemein ein öffentliches Stromnetz) möglichst gleichmäßig zu belasten und insbesondere Schieflasten zu vermeiden, ist es bekannt, unterschiedliche Phasen des Versorgungstromnetzes bzw. eines hiervon geführten Wechselstroms an unterschiedliche Abschnitte der fahrzeugexternen Stromversorgung anzuschließen. Anders ausgedrückt können aufeinanderfolgende Abschnitte der Stromversorgung jeweils Wechselstrom mit voneinander unterschiedlichen Phasen führen oder, mit anderen Worten, aus unterschiedlichen Phasen eines typischerweise dreiphasigen Versorgungsstromnetzes gespeist werden. Hierfür werden die Abschnitte von sogenannten Unterwerken an das Versorgungsstromnetz angeschlossen und mit Strom einer gewünschten Phase versorgt.

Eine typische an der Stromversorgung anliegende Spannung beträgt 25 kV und die Frequenz eines hiervon geführten Wechselstroms beträgt zum Beispiel 50 Hz oder 60 Hz. In Deutschland sind eine Spannung von 15 kV und eine Stromfrequenz von 16,7 Hz verbreitet.

Die Abschnitte der Stromversorgung werden über sogenannte Phasen-Trennstellen elektrisch voneinander getrennt. Eine typische Phasen-Trennstelle zeichnet sich durch das Isolieren einer ersten angrenzenden Stromführungseinrichtung (beispielsweise in Form einer Oberleitung oder Stromschiene) mit einem sogenannten Streckentrenner aus. Anschließend kann ein Oberleitungs- oder Stromschienenabschnitt innerhalb der Trennstelle folgen, der nicht mit einer Spannung versorgt wird und gegebenenfalls sogar geerdet sein kann. Aus diesem Abschnitt kann keine elektrische Energie für einen Antrieb des Schienenfahrzeugs entnommen werden. Es folgt dann wiederum eine Stromführungseinrichtung, die jedoch bevorzugt Strom einer anderen Phase führt und hierfür bevorzugt auch von einem anderen Unterwerk gespeist wird, als die vorangehende Stromführungseinrichtung. Auch eine Speisung aus einem anderen Strompfad desselben Unterwerks ist möglich.

Zusammengefasst kann eine Trennstelle und insbesondere eine Phasen-Trennstelle einen neutralen Abschnitt innerhalb der Stromversorgung definieren, in dem zumindest im Regelfall keine Energieentnahme für ein Antreiben des Schienenfahrzeugs möglich ist.

Es ist aber auch möglich, in Störfällen oder bei einem Sonderbetrieb Trennstellen zumindest vorrübergehend dennoch zu bestromen. Auch ein dynamisches bzw. bedarfsweises Einspeisen von Strom in die Trennstelle während der Durchfahrt eines Schienenfahrzeugs ist möglich. Im Rahmen dieser Erfindung kann jedoch vorgesehen sein, derartige Sonderbetriebe und hierfür ausgelegte Trennstellen nicht zu berücksichtigen und/oder sich auf Trennstellen und insbesondere Phasen-Trennstellen zu fokussieren, die (zumindest im störfreien Regelfall) einen neutralen Abschnitt der obigen Art definieren. Sind innerhalb der Stromversorgung auch zumindest selektiv bestrombare Trennstellen vorgesehen, kann jedoch bei diesen Trennstellen gemäß jeglicher der hierin geschilderten Varianten analog zu Trennstellen mit rein neutralen Abschnitten verfahren werden

Die Anmeldung richtet sich besonders auf das Passieren von Phasen-Trennstellen, ist jedoch nicht hierauf beschränkt. So sind auch Trennstellen bekannt, um einen Übergang zwischen unterschiedlichen Spannungs- oder Stromsystemen zu ermöglichen (sog. Systemtrennstellen).

Bisher durchfahren elektrische (d. h. mit elektrischer Energie angetriebene) Schienenfahrzeuge Trennstellen und insbesondere Phasen-Trennstellen mit deaktiviertem Antriebssystem. Ein Stromabnehmer kann zwar in elektrisch leitendem Kontakt mit der Stromversorgung bleiben, es wird aber typischerweise ein sogenannter Hauptschalter deaktiviert und genauer gesagt geöffnet, der diesen Stromabnehmer mit einem Haupttransformator verbindet. Das Öffnen des Hauptschalters ist gleichbedeutend mit einer zumindest teilweisen Deaktivierung des Antriebssystems, da aufgrund der elektrischen Trennung vom Stromabnehmer keine Wandlung einer von extern aufgenommenen elektrischen Energie in Traktionsenergie für das Schienenfahrzeug mehr möglich ist, optional aber weiterhin die Möglichkeit für ein Bremsen unter Mitwirkung von Komponenten des Antriebssystems möglich ist. Zum Beispiel kann ein elektrisches Bremsen mit einem Traktionsmotor durchgeführt werden, der im Generatorbetrieb betrieben wird. Dabei gewonnene elektrische Energie kann beispielsweise dissipiert oder gespeichert werden.

Der Haupttransformator dient in an sich bekannter Weise dazu, die am Stromabnehmer bzw. an einer Primärseite des Haupttransformators anliegende Wechselspannung auf ein gewünschtes Wechselspannungsniveau zu transformieren und typischerweise zu senken. Anschließend kann mittels sogenannter Netzstromrichter die transformierte Wechselspannung in eine Gleichspannung gewandelt werden, die typischerweise an einem Gleichspannungs-Zwischenkreis anliegt. Dieser versorgt verschiedene Verbraucher (zum Beispiel sogenannte Hilfsbetriebe) und/oder die Traktionsmotoren des Schienenfahrzeugs, wofür die Gleichspannung typischerweise wieder von einem Motorstromrichter in eine geeignete Wechselspannung gewandelt wird. Auch die Netzstromrichter werden bei einem Durchfahren einer Trennstelle typischerweise deaktiviert oder gesperrt, um ein instabiles Magnetisieren des Haupttransformators (zum Beispiel ohne stabilisierende Primärspannung) zu vermeiden.

Auch der Netzstromrichter wird bei einem Durchfahren einer Trennstelle typischerweise deaktiviert oder gesperrt.

Eine mögliche Schrittfolge beim Durchfahren einer Trennstelle und insbesondere einer Phasen-Trennstelle lautet wie folgt:
- Anzeigen einer vorausliegenden Phasen-Trennstelle mittels eines Lichtsignals, woraufhin ein Fahrer die folgende Abfolge zumindest teilweise manuell durchführt; oder Erkennen einer vorausliegenden Phasen-Trennstelle mittels eines (bevorzugt fahrerautonomen) Schienenfahrzeug-Steuersystems, beispielsweise mittels eines sogenannten ATC-Systems (Automatic Train Control), woraufhin die folgende Abfolge zumindest teilweise automatisch durchgeführt wird;
- Herunterfahren der Traktionsleistung;
- Sperren des/der Netzstromrichter;
- Speisung eines Bordnetzes und/oder Gleichspannungs-Zwischenkreises des Schienenfahrzeugs aus einer anderen Quelle als die externe Stromversorgung. Beispielsweise kann wenigstens ein Traktionsmotor (insbesondere ein Permanentmagnetmotor) des fahrenden Schienenfahrzeugs in einen generatorischen Betriebszustand geschaltet werden, um elektrische Energie zu erzeugen, was auch als Stützbremsbetrieb bezeichnet werden kann. Alternativ kann das Bordnetz bzw. der Gleichspannung-Zwischenkreis elektrisch abgeschaltet werden, wenn diese über eine separate (Hilfsbetriebe-) Wicklung von dem Haupttransformator versorgt werden bzw. hiermit verbunden sind.
- Öffnen des Hauptschalters und Passieren der Trennstelle;
- bei fahrerautonomer Steuerung: Erkennen einer anliegenden Spannung am Stromabnehmer nach Durchfahren der Trennstelle;
- Schließen des Hauptschalters;
- Antakten des/der Netzstromrichter, insbesondere um einen Gleichspannungs-Zwischenkreis gleichmäßig bzw. langsam wieder aufzuladen;
- Hochfahren der Traktionsleistung.

Diese Abfolge ist in mehrfacher Hinsicht nachteilig. Zum einen können Phasen-Trennstellen nicht rechtzeitig erkannt werden, insbesondere wenn dies durch den Fahrzeugführer erfolgen soll. Dies kann in einem Durchfahren der Trennstelle bei geschlossenem Hauptschalter und ohne Rücknahme der Traktionsleistung resultieren, was zu einem Lichtbogen beim Erreichen der Trennstellen führen kann. Dies kann Schäden an der Stromversorgung und insbesondere an einem dortigen Streckentrenner und/oder an dem Fahrzeug verursachen. Defekte Streckentrenner tauchen überdurchschnittlich häufig in Schadensstatistiken von Schienenfahrzeug-Infrastrukturen auf.

Das häufige Öffnen und Schließen des Hauptschalters führt zudem zu einem frühen Verschleiß dieses Bauteils, was Kosten verursacht.

Ferner führt ein Schließen des Hauptschalters nach dem Passieren der Phasen-Trennstelle und das erneute Verbinden des Haupttransformators mit der Spannung der Stromversorgung zu hohen Einschaltströmen. Dies bedingt hohe Belastungen des Haupttransformators sowie damit verbundener elektrischer Komponenten und erfordert allgemein eine entsprechend robuste und kostspielige Auslegung der Bauteile, die durch etwaige Einschaltströme (engl.: Inrush-Currents) beeinflusst werden.

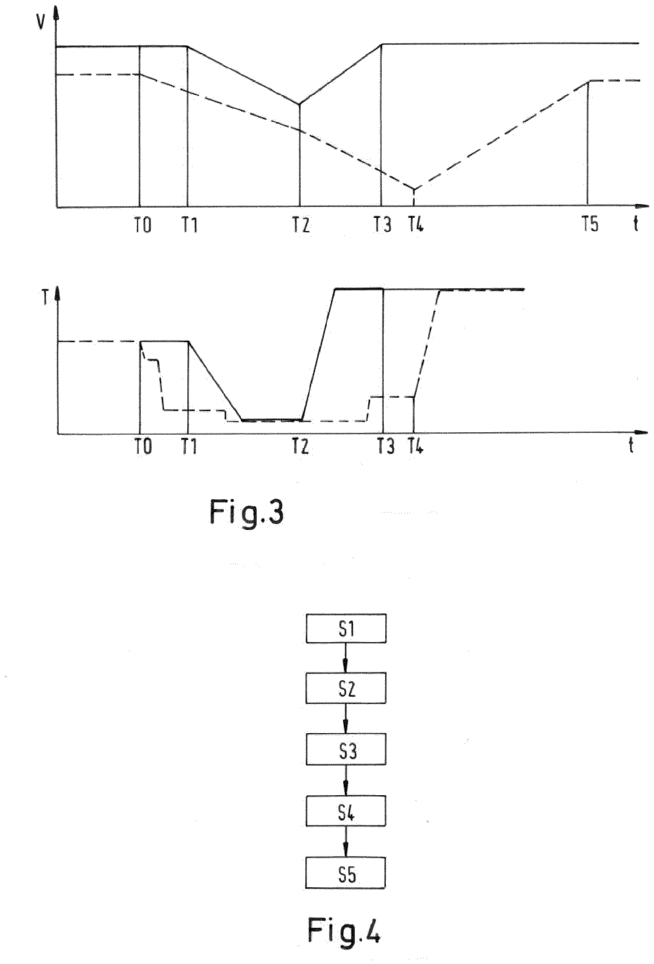

Weiter führt das bisherige Vorgehen zu einem erheblichen Verlust an Fahrdynamik, da das Schienenfahrzeug über einen langen Zeitraum nur passiv (d. h. nicht angetrieben) weiterrollt. Insbesondere bei Hochgeschwindigkeitsstrecken, bei denen zum Beispiel alle 15 bis 20 km Phasen-Trennstellen mit Längen von mehreren 100 m vorliegen können, kann dies zu erheblichen Einbußen der Fahrdynamik führen. Dabei ist zu berücksichtigen, dass die vorstehenden Schritte deutlich mehr Zeit benötigen, als für ein Durchfahren der Trennstelle eigentlich erforderlich ist. Dies resultiert aus dem Zeitbedarf für die durchgeführten Schaltvorgänge und die Ansteuerung der einzelnen Komponenten. Wie nachstehend anhand der Diagramme aus Figur 3 erläutert, muss in diesem Fall nämlich die Traktionsleistung bereits deutlich vor dem Einfahren in eine Trennstelle zurückgefahren werden und kann die Traktionsleistung erst nach einem Ausfahren aus der Trennstelle wieder zu ihrem ursprünglichen Wert zurückkehren. In der Folge treten signifikante Geschwindigkeitsverluste auf.

Ferner kann der Passagierkomfort leiden, wenn das Bordnetz bzw. etwaige Hilfsbetriebe, wie z.B. eine Fahrzeugklimatisierung oder Innenraumbeleuchtung, vorübergehend ausgeschaltet werden müssen, wenn sie nicht mehr vom abgeschalteten Haupttransformators gespeist werden können. Dies betrifft insbesondere Varianten, bei denen das Bordnetz und/oder die Hilfsbetriebe über eine eigene Sekundärwicklung mit dem Haupttransformator verbunden sind und zum Beispiel nicht über einen Gleichspannungs- Zwischenkreis.

Ein weiterer wesentlicher Nachteil tritt bei einem Einfahren in einen Abschnitt der Stromversorgung auf, der nach einer Trennstelle liegt. Dort kommt es teilweise zu hohen Ausgleichsströmen innerhalb des Haupttransformators, welche den Haupttransformator und hiermit elektrisch verbundene Bauteile beschädigen können. Folglich müssen diese Komponenten entsprechend robust ausgelegt werden, was die Kosten erhöht. Zudem kann es bei unzulässig hohen Ausgleichsströmen zu Schutzabschaltungen im Antriebssystem des Schienenfahrzeugs kommen, was die Fahrdynamik beeinträchtigt.

Eine Aufgabe der vorliegenden Erfindung ist es daher, zumindest einige der vorstehenden Nachteile und insbesondere das Auftreten hoher Ausgleichsströme zu vermeiden.

Diese Aufgabe wird durch ein Verfahren und ein Schienenfahrzeug mit den Merkmalen der beigefügten unabhängigen Ansprüche gelöst. Vorteilhafte Weiterbildungen sind in den abhängigen Ansprüchen angegeben. Weiter versteht es sich, dass sämtliche der einleitenden Bemerkungen und Merkmale auch bei der vorliegenden Lösung vorgesehen sein bzw. auf diese zutreffen können, sofern nicht anders angegeben oder ersichtlich.

Die Erfindung sieht allgemein vor, zum Vermeiden hoher Ausgleichsströme die Phasenlage in einem vorausliegenden Abschnitt der Stromversorgung zu erfassen. In Reaktion darauf wird dann die Phasenlage der primärseitigen Spannung des Haupttransformators eingestellt. Insbesondere kann die Phasenlage derart eingestellt werden, dass sie sich der detektierten Phasenlage annähert und/oder hiermit weitestmöglich synchronisiert wird.

Das Einstellen der Phasenlage erfolgt dabei bevorzugt durch Anlegen einer sekundärseitigen Wechselspannung, die in einer primärseitigen Spannung mit definierter Phasenlage resultiert. Beispielsweise wird die primärseitige Spannung nach Maßgabe eines Magnetfelds im Haupttransformators induziert, wobei dieses Magnetfeld durch die sekundärseitige Wechselspannung hervorgerufen wird. Der Zusammenhang zwischen einer sekundärseitigen Wechselspannung und einer resultierenden Phasenlage einer primärseitigen Spannung kann bekannt sein und/oder vorab per Testfahrten oder Simulationen ermittelt werden.

Folglich kann gemäß einer Ausführungsform vorgesehen sein, den Haupttransformator beim Passieren (d. h. Durchfahren) einer Phasen-Trennstelle nicht vollständig abzuschalten, d. h. nicht vollständig von einer Spannungsversorgung zu trennen. Stattdessen kann vorgesehen sein, an eine Sekundärseite des Haupttransformators eine Wechselspannung anzulegen. Neben dem bereits erläuterten Vorteil im Sinne einer Einstellmöglichkeit für die primärseitige Phasenlage hat dies zur Folge, dass der Haupttransformator zumindest teilweise magnetisiert bleibt. Anders ausgedrückt kann ein Magnetfeld des Haupttransformators zumindest teilweise aufrechterhalten werden, obwohl im Bereich der Trennstelle primärseitig keine oder zumindest nicht die übliche Spannung der fahrzeugexternen Stromversorgung anliegt.

Vorteilhaft ist dies zunächst dahingehend, als dass Einschaltströme beim Wiederverbinden des Haupttransformators mit der Spannung der Stromversorgung nach dem Durchfahren der Trennstelle begrenzt werden können.

Zudem wird durch Anlegen einer sekundärseitigen Wechselspannung das Risiko von internen Resonanzen des Haupttransformators reduziert, die auftreten können, wenn es beim Durchfahren der Trennstelle zu einem primärseitigen Spannungsverlust kommt. Derartige Resonanzen können Beschädigungen des Transformators sowie elektrisch hiermit verbundener Komponenten bewirken. Besonders zuverlässig wird das Resonanzrisiko dann reduziert, wenn gemäß nachstehender Ausführungsformen dem Haupttransformator auch in definierter Weise Energie entnommen wird, d. h. eine dämpfende Belastung auf den Haupttransformator geschaltet wird. Erfindungsgemäß kann dies durch einen Stromrichter erfolgen, der als Gleichrichter betrieben wird und bevorzugt einen Gleichspannungs-Zwischenkreis des Schienenfahrzeugs mit Energie aus dem Haupttransformator speist.

Das Einstellen der Phasenlage und insbesondere die Synchronisation mit einer vorausliegenden Phasenlage führen aber auch dazu, dass nach dem Durchfahren der Trennstelle deutlich schneller wieder eine Traktionsleistung erzeugt werden kann, als dies bisher der Fall ist, da der Betriebszustand des Haupttransformators bereits vorausschauend angepasst wird. Somit wird die Fahrdynamik verbessert und wird die Dauer ohne Traktionsleistung und ein allgemein daraus resultierender Geschwindigkeitsverlust verringert. Dies wird zusätzlich durch Ausführungsformen verbessert, bei denen der Hauptschalter beim Durchfahren der Trennstelle geschlossen bleibt.

Im Detail wird ein Verfahren zum Betreiben eines Schienenfahrzeugs beim Passieren von Trennstellen in einer fahrzeugexternen Stromversorgung (die zum Beispiel eine Oberleitung oder eine feste Fahrleitung umfasst, zum Beispiel eine oberhalb des Schienenfahrzeugs montierte Stromschiene) vorgeschlagen, wobei das Schienenfahrzeug umfasst:
- wenigstens einen Stromabnehmer zum Aufnehmen elektrischer Energie von (bzw. aus) der Stromversorgung;
- einen Haupttransformator zum Transformieren der aufgenommenen elektrischen Energie, die an einer Primärseite des Haupttransformators bereitgestellt ist, auf ein gewünschtes Spannungsniveau an einer Sekundärseite des Haupttransformators;
- eine Detektionseinrichtung, die dazu eingerichtet, eine Phasenlage eines von der Stromversorgung geführten Wechselstroms zu detektieren;
wobei das Verfahren umfasst:
- Detektieren der Phasenlage mit der Detektionseinrichtung in einem Abschnitt der Stromversorgung, der nach einer Trennstelle liegt; und
- Einstellen der Phasenlage einer primärseitigen Spannung des Haupttransformators in Abhängigkeit der detektierten Phasenlage.

Es kann also verfahrensgemäß vorgesehen sein, dass in einem ersten Betriebszustand außerhalb von Trennstellen über die spannungsführende Stromversorgung ein führendes Netz an dem Stromabnehmer das Schienenfahrzeug anliegt. Folglich kann elektrische Energie aufgenommen bzw. eingespeist werden, die mittels des Haupttransformators transformiert wird. In einem zweiten Betriebszustand beim Durchfahren einer Trennstelle kann hingegen kein führendes Netz anliegen und folglich auch keine externe Energieversorgung und Transformation erfolgen. Stattdessen kann in diesem Zustand das ausschließlich sekundärseitige Anlegen der Wechselspannung erfolgen.

Das Schienenfahrzeug kann mehrere Einzelfahrzeuge oder Zugteile umfassen, die prinzipiell voneinander entkoppelbar und unabhängig voneinander bewegbar sein können. Zum Beispiel kann das Schienenfahrzeug ein Zug aus und/oder ein Verbund von Einzelfahrzeugen sein. Die hierin offenbarten Komponenten des Schienenfahrzeugs können folglich auf mehrere Einzelfahrzeuge eines solchen Verbundes bzw. Zuges verteilt sein. Bevorzugt ist wenigstens eine Lokomotive und/oder ein Triebwagen von einem solchen Verbund umfasst. Ebenso kann das Schienenfahrzeug aber ein Einzelfahrzeug sein, zum Beispiel eine einzelne Lokomotive oder ein einzelner Triebwagen.

Bei den Trennstellen handelt es sich bevorzugt um Phasen-Trennstellen, die besonders weit verbreitet sind. Die Trennstellen können zumindest in einem störungsfreien Normalbetrieb spannungsfrei und/oder stromfrei sein und folglich neutrale Abschnitte der Stromversorgung bilden. Während dem Passieren einer Trennstelle kann (zumindest im störungsfreien Normalbetrieb) die Energieaufnahme aus dem Stromnetz unterbrochen oder um wenigstens mehr als die Hälfte reduziert sein.

Allgemein kann vorgesehen sein, die Traktionsleistung zu reduzieren, sodass diese während des Passierens einer Trennstelle vorübergehend einen geringeren Wert einnimmt, als in darauffolgenden und/oder vormals durchfahrenen (gespeisten) Abschnitten der Stromversorgung. Das Reduzieren der Traktionsleistung kann in Vorbereitung auf eine vorausliegende Trennstelle bereits vorzeitig eingeleitet werden. Optional kann die Traktionsleistung aber erst nach dem Verlassen der Trennstelle wieder erhöht werden. Durch Reduzieren der Traktionsleistung, die allgemein auch auf einen Wert von Null reduziert werden kann, kann die Gefahr des Ausbildens von Lichtbögen beim Einfahren in eine Phasen-Trennstelle reduziert werden, insbesondere auch dann, wenn der Hauptschalter in einem geschlossenen Zustand verbleibt. Eine Höhe der Traktionsleistung kann über nachstehend erläuterte Motorstromrichter gesteuert werden.

Allgemein können jegliche hierin erwähnten Stromrichter getaktet betrieben werden und/oder nach Art einer Pulsweitenmodulation durch schnelle Schaltfolgen z.B. eine Einhüllende als (Grundwelle) einer Wechselspannung erzeugen.

Wie erwähnt, kann der Stromabnehmer einen Pantografen umfassen.

Bei dem Haupttransformator handelt es sich bevorzugt um einen Transformator, an dessen Primärseite in an sich bekannter Weise eine am Stromabnehmer anliegende und somit von der Stromversorgung geführte Spannung anlegbar ist. Dies gilt insbesondere dann, wenn ein nachstehend erläuterter Hauptschalter zwischen Haupttransformator und Stromabnehmer geschlossen ist.

Weiter ist der Haupttransformator dazu eingerichtet, die von der Stromversorgung geführte Spannung in eine für den Betrieb des Schienenfahrzeugs geeignete Spannung umzuwandeln und insbesondere das Spannungsniveau zu reduzieren.

Unter der Primärseite des Haupttransformators wird hierin diejenige Seite verstanden, an der eine am Stromabnehmer anliegende bzw. von der Stromversorgung geführte Spannung anlegbar ist, da die Stromversorgung die Hauptenergiequelle des Haupttransformators bzw. des Schienenfahrzeugs ist. Unter der Sekundärseite des Haupttransformators wird hingegen diejenige Seite verstanden, an die Stromrichter zum Versorgen eines etwaigen Gleichspannung-Zwischenkreises, von Traktionsmotoren oder von sogenannten Hilfsbetrieben anschließbar sind. Je nach der betrachteten Seite kann von einer dort anliegenden Primärspannung oder Sekundärspannung gesprochen werden.

Das Einstellen der primären Phasenlage kann, wie erwähnt, durch Anlegen einer sekundärseitigen Wechselspannung erfolgen. Der Zusammenhang zwischen Sekundärspannung und Primärspannung sowie insbesondere deren Phasenlagen und somit auch, mit welchen Phasenlagen an der Primärseite welche Phasenlagen an der Sekundärseite eingestellt werden können (und umgekehrt), ergibt sich aus der Konstruktion des Haupttransformators und/oder kann vorab experimentell ermittelt werden. Informationen betreffend diesen Zusammenhang können in einer Speichereinrichtung des Schienenfahrzeugs hinterlegt sein. Eine Steuereinrichtung des Schienenfahrzeugs kann auf derartige Informationen zurückgreifen und kann die Wechselspannung an der Sekundärseite darauf basierend geeignet einstellen. Ob eine solche Primärspannung erzielt wird, kann insbesondere während des Passierens der Trennstelle per nachfolgend erläuterter Spannungsmesseinrichtung überprüft werden.

Dabei orientiert sich das Einstellen der Phasenlage an der detektierten Phasenlage. Bevorzugt wird die primärseitige Phasenlage derart eingestellt und/oder die sekundärseitige Wechselspannung derart erzeugt, dass eine Phasenlage der Spannung an der Primärseite gegenüber einer Phasenlage vor dem Passieren einer Trennstelle verändert wird. Dem liegt der Gedanke zugrunde, dass sich insbesondere bei Phasen-Trennstellen der Stromversorgung die anliegenden Phasen vor der Trennstelle und nach der Trennstelle voneinander unterscheiden, was auch entsprechend detektiert werden wird. Folglich wird auch die Wechselspannung bevorzugt derart erzeugt, dass sich die Phasenlage der Primärspannung gegenüber dem Zustand vor dem Einfahren in die Trennstelle verändert. Dies kann den Synchronisierungsaufwand mit der neuen Phasenlage bei einem Ausfahren aus der Trennstelle reduzieren.

Allgemein kann hierin auf Grundwellen einer Sekundär- und/oder Primärspannung abgestellt werden, insbesondere im Zusammenhang mit hierin geschilderten Einstell- und Synchronisiervorgängen dieser Spannungen. Genauer gesagt können bei der nachstehend erläuterten Synchronisation Grundwellen der erzeugten Spannungen betrachtet werden und insbesondere eine Grundwelle einer infolge der sekundärseitig angelegten Wechselspannung generierten Primärspannung des Haupttransformators.

Diese sollte mit der Grundwelle einer erwarteten Phasenlage der Stromversorgung möglichst übereinstimmen. Dies trägt dem Umstand Rechnung, dass die genannten Spannungen auch weitere Wellen- bzw. Schwingungsanteile z.B. in Form von Oberwellen aufweisen können.

Die Detektionseinrichtung kann die Phasenlage in einem Abschnitt der Stromversorgung detektieren, der unmittelbar auf eine Trennstelle folgt und/oder zwischen einer aktuell durchfahrenen und einer nachfolgenden Trennstelle liegt. Durch nachstehend erläuterte Positionierungen der Detektionseinrichtung kann derjenige Stromversorgungs-Abschnitt, mit dem zum Bestimmen der Phasenlage sensorisch wechselgewirkt wird (bzw. der vermessen wird), einem Stromabnehmer und/oder einer Trennstelle vorauseilen, und zwar um bis zu einer vollständigen Schienenfahrzeuglänge, wenigstens aber um die Hälfte der Schienenfahrzeuglänge. Beispielsweise kann die Detektionseinrichtung in Fahrtrichtung betrachtet vor dem Stromabnehmer positioniert sein, um die vorausliegende Phasenlage zu ermitteln, bevor der Stromabnehmer aus einer Trennstelle in den Stromversorgungs-Abschnitt (Fahrdrahtabschnitt) mit dieser Phasenlage einfährt. Hieraus ergibt sich ein Zeitvorsprung, der für ein Einstellen der Phasenlage zur Verfügung steht, bevor dieser Stromversorgungs-Abschnitt erreicht wird.

Gemäß einem Aspekt des Verfahrens und des Schienenfahrzeugs kann die Detektionseinrichtung in einem Abstand wenigstens einem Meter und z.B. von mehreren Metern, bspw. mindestens 10 m, bevorzugt mindestens 30 m oder wenigstens 100 m zu dem (eine Energie aufnehmenden) Stromabnehmer positioniert sein. Beispielsweise können die Detektionseinrichtung und der Stromabnehmer in unterschiedlichen Hälften oder an unterschiedlichen Enden des Schienenfahrzeugs positioniert sein, zum Beispiel an einem vorderen und an einem hinteren Ende. Die Hälften können entlang einer Längsachse des Schienenfahrzeugs betrachtet werden, d. h. eine erste (vordere) halbe Länge und eine zweite (hintere) halbe Länge einnehmen. Die Enden können jeweils zwischen einer in Längsrichtung betrachteten vordersten bzw. hintersten Tür und einem physischen Ende des Schienenfahrzeugs liegen. Sind, wie im Zusammenhang mit den Figuren erläutert, an beiden Enden sowohl eine selektiv betreibbare Detektionseinrichtung und ein selektiv betreibbarer Stromabnehmer vorgesehen, kann am vorausfahrenden Ende die Detektionseinrichtung und am hinteren Ende der Stromabnehmer betrieben bzw. aktiviert werden. Der Stromabnehmer und die Detektionseinrichtung können auch an unterschiedlichen Wagen und/oder Einzelfahrzeugen angebracht sein. Beispielsweise können sie um mehrere Wagenlängen des Schienenfahrzeugs voneinander beabstandet sein.

Je größer der Abstand, desto größer der Zeitvorsprung der nach einer Detektion der Phasenlage zum Einstellen der Primärspannung bleibt. Bevorzugt ist der Abstand derart gewählt, dass er größer als eine in einem Schienenverkehrsnetz, in dem das Schienenfahrzeug verkehrt, vorgeschriebene oder durchschnittliche Länge der Trennstellen ist. Dann kann die Detektionseinrichtung in einem auf die Trennstelle folgenden Stromversorgung-Abschnitt bereits die Phasenlage detektieren, während sich der Stromabnehmer noch in der Trennstelle befindet. Zudem verbleibt dann auch ein großer Längenanteil der Trennstelle, um eine Synchronisation vor dem Einfahren des Stromabnehmers in den folgenden Stromversorgungs-Abschnitt durchzuführen.

Sofern hierin von "vorausliegenden" Abschnitten oder allgemein Ortsangaben im Sinne von "vor" oder "hinter" gesprochen wird, kann sich dies auf eine Fahrtrichtung des Schienenfahrzeugs beziehen.

Die Detektionseinrichtung kann die Phasenlage sensorisch erfassen. Insbesondere kann sie gemeinsam mit dem Schienenfahrzeug bewegt werden und Abschnitte der Stromversorgung (insbesondere eines Fahrdrahtes) sensorisch erfassen oder vermessen, die ihr gegenüberliegen. Beispielsweise kann die Detektionseinrichtung (oder zumindest nachstehende Messeinheit hiervon) in oder an einem Dachbereich eines Schienenfahrzeugs positioniert sein und darüber liegende Fahrdrahtabschnitte erfassen.

Die Detektionseinrichtung kann ein Detektionssignal liefern (zum Beispiel über eine darin integrierte Messeinheit), das von einer Auswerteeinrichtung der Detektionseinrichtung zum Bestimmen der Phasenlage ausgewertet werden kann. Die Auswerteeinrichtung kann in eine Steuereinrichtung des Schienenfahrzeugs integriert sein und/oder räumlich von der Messeinheit beanstandet sein. Die Detektionseinrichtung kann berührungslos arbeiten und/oder berührungslos die relevanten Informationen detektieren. Genauer gesagt kann sie die Stromversorgung während der Detektion nicht berühren. Sofern hierin auf Positionierungen der Detektionseinrichtung abgestellt wird, kann dies ausschließlich eine etwaige Messeinheit betreffen.

Ein Beispiel einer geeigneten Detektionseinrichtung findet sich in der EP 3 182 142 A, insbesondere in Form der Vorrichtung 1 aus der dortigen Figur 1. Die dortigen Sensorelemente bzw. kapazitiven Einheiten sind in der Lage, in Reaktion auf in einer Stromversorgung anliegenden Spannung selbst Spannungen zu erzeugen. Der zeitliche Verlauf dieser erzeugten Spannungen folgt denjenigen der Stromversorgung, sodass daraus auch die Phasenlage der Stromversorgung bestimmbar ist. Beispielsweise wirken die kapazitiven Einheiten als eine Art kapazitiver Spannungsteiler, wobei die darin abfallende Spannung in ihrem Verlauf derjenigen der Stromversorgung folgt, was Rückschlüsse auf die Phasenlage ermöglicht.

Alternativ zu einer kapazitiv und/oder nach Art eines Spannungsteilers arbeitenden Detektionseinrichtung kommt auch ein Feldsensor (oder auch Feldmühle) als Detektionseinrichtung (oder zumindest als Messeinheit hiervon) in Betracht.

Die dortigen Sensorelemente bzw. kapazitiven Einheiten sind in der Lage, in Reaktion auf in einer Stromversorgung geführte Ströme selbst Ströme zu erzeugen. Der zeitliche Verlauf dieser erzeugten Ströme folgt denjenigen der Stromversorgung, sodass daraus auch die Phasenlage der Stromversorgung bestimmbar ist.

Die Phasenlage der Primärspannung wird bevorzugt derart eingestellt, dass sie zumindest soweit mit der (erwarteten oder gemessenen) Phasenlage nach der Trennstelle synchronisiert ist, dass etwaige Ausgleichsströme einen zulässigen Maximalwert nicht überschreiten. Der zulässige Maximalwert kann eine Grenze definieren, ab deren Überschreiten mit einem erhöhten Risiko von Schutzabschaltungen zu rechnen ist.

Insbesondere kann gemäß einem Aspekt des Verfahrens und des Schienenfahrzeugs vorgesehen sein, dass die geänderte bzw. eingestellte Phasenlage (der Haupttransformator-Primärspannung) einer detektierten Phasenlage der Stromversorgung nach der Trennstelle entspricht oder dass eine Phasendifferenz zu dieser Phasenlage, die nach der Trennstelle vorliegt, eine zulässige Maximaldifferenz nicht überschreitet. Die zulässige Maximaldifferenz kann derart gewählt sein, dass bis zum Erreichen dieser Maximaldifferenz keine unzulässig hohen Ausgleichsströme auftreten und insbesondere keine Ausgleichsströme, die den vorstehend erläuterten zulässigen Maximalwert überschreiten.

Wie die Wechselspannung an der Sekundärseite gewählt werden muss, damit eine Synchronisation gelingt, die die hierin geschilderten Bedingungen hinsichtlich Ausgleichsstrom und/oder Phasendifferenz erfüllt, kann per Simulation oder Testfahrten bestimmt werden.

Gemäß einer bevorzugten Variante des Verfahrens und des Schienenfahrzeugs liegt eine ausreichende Synchronisation bei einer Phasendifferenz von nicht mehr als 135° und insbesondere nicht mehr als 120° der Phasenlagen vor, d. h. bei derartigen Phasendifferenzen treten erwartungsgemäß keine unzulässig hohen Ausgleichsströme auf.

Allgemein können bei der Synchronisation Grundwellen der erzeugten Spannungen betrachtet werden und insbesondere eine Grundwelle der infolge der sekundärseitig angelegten Wechselspannung generierten Primärspannung des Haupttransformators. Diese sollte mit der Grundwelle einer erwarteten Phasenlage möglichst übereinstimmen.

Das Einstellen der Phasenlage kann allgemein fahrerautonom erfolgen und zum Beispiel durch eine Steuereinrichtung des Schienenfahrzeugs gesteuert werden (beispielsweise durch Ansteuern eines eine sekundärseitige Wechselspannung erzeugenden Stromrichters). Auch ein manuelles Einstellen der Phasenlage zum Beispiel durch manuelles Vorgeben einer sekundärseitigen Wechselspannung wäre aber möglich. Welche Phasenlage primärseitig vorliegt, kann durch eine nachstehend erläuterte Spannungsmessrichtung oder auch eine Strommesseinrichtung zum Beispiel in der Verbindung zwischen Haupttransformator und Stromabnehmer überprüft werden.

Dass das Schienenfahrzeug eine Trennstelle der Stromversorgung passiert, kann vom Fahrer zum Beispiel per Lichtsignal erkannt oder kann (zum Beispiel anhand einer detektierten Spannung am Stromabnehmer oder an der Haupttransformator-Primärseite) automatisch erkannt werden. Analog zu existierenden Lösungen kann dann vom Fahrer oder automatisch die Traktionsleistung reduziert werden. Anschließende Schritte, wie zum Beispiel das Anlegen der Wechselspannung oder auch sämtliche weitere hierin geschilderten Maßnahmen, können prinzipiell vom Fahrer oder fahrerautonom eingeleitet werden.

Wie erwähnt, sieht eine Ausführungsform des Verfahrens und des Schienenfahrzeugs vor, dass die Phasenlage der primärseitigen Spannung durch Anlegen einer sekundärseitigen Spannung an den Haupttransformator eingestellt wird. Das Anlegen einer Wechselspannung an der Sekundärseite des Haupttransformators zum Einstellen der Phasenlage kann durch einen geeigneten Wechselspannungsgenerator erfolgen. Hierbei handelt es sich, wie nachstehend noch näher erläutert, bevorzugt um einen vorhandenen Stromrichter und insbesondere einen Netzstromrichter, der als ein Wechselrichter betrieben wird. Der Stromrichter wird bevorzugt aus elektrischen Energiequellen oder von elektrischen Energiegeneratoren des Schienenfahrzeugs mit elektrischer Energie gespeist und wandelt diese in eine Wechselspannung um, die an der Sekundärseite des Haupttransformators anliegt.

Durch Anlegen der Wechselspannung an der Sekundärseite wird ein Magnetfeld des Haupttransformators zumindest teilweise aufrechterhalten, was vorstehend diskutierte Vorteile z.B. des Vermeidens von Einschaltströmen mit sich bringt. Zudem wird auch eine Primärspannung an der Primärseite des Haupttransformators induziert und kann deren Phasenlage eingestellt werden, wie erfindungsgemäß allgemein beabsichtigt.

Gemäß einer Weiterbildung des Verfahrens und des Schienenfahrzeugs wird die Phasenlage eingestellt, während das Schienenfahrzeug und insbesondere der Stromabnehmer die Trennstelle passiert (d. h. sich noch in der Trennstelle befindet oder gerade in diese einfährt). Sofern hierin auf einem Betriebszustand Bezug genommen wird, in dem das Schienenfahrzeug eine Trennstelle passiert oder auch "während das Schienenfahrzeug die Trennstelle passiert" kann hierunter verstanden werden, dass wenigstens ein Abschnitt des Schienenfahrzeugs die Trennstelle passiert bzw. sich darunter befindet. Insbesondere kann ein Stromabnehmer und können bevorzugt sämtliche und/oder der einzige in Kontakt mit der Stromversorgung stehende Stromabnehmer die Trennstelle passieren. Andere Abschnitte und/oder Komponenten des Schienenfahrzeugs, wie zum Beispiel die Detektionseinrichtung oder ein vorausfahrender Triebwagen, können sich hingegen bereits außerhalb der Trennstelle befinden.

Anders ausgedrückt wird die Trennstelle genutzt, in der in der Regel ohnehin keine Energieaufnahme erfolgt, um den Haupttransformator auf den nachfolgenden Stromversorgungs-Abschnitt und die dort vorliegende Phasenlage des Wechselstroms vorzubereiten. Es hat sich gezeigt, dass bestehende Trennstellelängen von zum Beispiel 200 m auch bei hohen Geschwindigkeiten ausreichen können, um die Phasenlage des Haupttransformators zu ändern und insbesondere auf eine gewünschte Phasenlage einzustellen. Dies macht sich diese Ausführungsform vorteilhaft zu Nutze, ohne dass das Einstellen der Haupttransformator-Phasenlage zu zusätzlichen Verlusten der Fahrdynamik führt oder den Betrieb anderweitig beeinträchtigt.

Allgemein kann die Trennstelle also eine Länge von mehr als 50 m und insbesondere mehr als 100 m aufweisen.

Vorzugsweise wird das Einstellen der Phasenlage spätestens nach dem Ausfahren aus einer Trennstelle und/oder Einfahren in einen neuen spannungsführenden Abschnitt der Stromversorgung beendet. Sollte bis dahin das Einstellen der gewünschten Phasenlage nicht gelungen sein, können die daraus resultierenden Ausgleichsströme in Kauf genommen werden, da diese aufgrund der zumindest teilweise erfolgten Angleichung der Phasenlage erwartungsgemäß nicht besonders hoch ausfallen werden.

Gemäß einer bevorzugten Weiterbildung des Verfahrens und des erfindungsgemäßen Schienenfahrzeugs umfasst das Schienenfahrzeug ferner einen Hauptschalter, der dazu eingerichtet ist, bei einem Öffnen eine elektrische Verbindung zwischen dem Stromabnehmer und dem Haupttransformator zumindest temporär zu trennen (oder anders ausgedrückt zu unterbrechen), und wobei folgendes erfolgt:
- Geschlossenhalten des Hauptschalters während eines Passierens einer Trennstelle.

Der Hauptschalter kann gemäß herkömmlicher Bauart ausgebildet sein. Er kann der einzige Schalter zum selektiven Trennen der elektrischen Verbindung von Stromabnehmer und Haupttransformators sein. Der Hauptschalter kann eine Steuereinrichtung umfassen oder von einer Steuereinrichtung des Schienenfahrzeugs ansteuerbar sein, um selektiv geöffnet und geschlossen zu werden.

Dadurch, dass der Hauptschalter trotz Passieren einer Trennstelle geschlossen gehalten und nicht wie bisher vorübergehend geöffnet wird, wird die Anzahl von dessen Öffnungs- und Schließvorgängen während einer Fahrt des Schienenfahrzeugs reduziert. Dies mindert den Verschleiß und erhöht die Lebensdauer des Hauptschalters. Auch ermöglicht das Geschlossenhalten das Verwenden ggf. ohnehin vorhandener Spannungsmesseinrichtungen und insbesondere eines Oberspannungswandlers zum Erfassen einer erzeugten Primärspannung, wenn diese zwischen Stromabnehmer und Hauptschalter geschaltet sind.

In diesem Zusammenhang kann ferner vorgesehen sein, dass dann, wenn eine Detektion der Phasenlage (zum Beispiel innerhalb einer vorgegebenen Zeitspanne und/oder bei einem Durchfahren der Trennstelle) nicht gelingt, die Phasenlage der primärseitigen Spannung in Abhängigkeit einer vermuteten Phasenlage erzeugt wird. Insbesondere kann dies dann vorgesehen sein, wenn die Detektion der Phasenlage nicht gelingt, während sich der Stromabnehmer in der Trennstelle befindet und/oder bevor er in den nachfolgenden spannungsführenden Streckenabschnitt einfährt. In diesem Fall geht nämlich der vorstehend diskutierte Zeitvorsprung verloren, innerhalb dem eine Synchronisation der Phasenlagen vorgenommen werden kann. Sollte also beim Erreichen eines Endes der Trennstelle und/oder eines auf die Trennstelle folgenden spannungsführenden Stromversorgung-Abschnitt kein Detektionsergebnis oder zumindest kein plausibles Detektionsergebnis vorliegen, kann statt einer detektierten Phasenlage von einer vermuteten Phasenlage ausgegangen werden.

Genauer gesagt ist es bei einer Variante des Verfahrens und des Schienenfahrzeugs möglich, dass bei bekannten Phasendifferenzen zwischen den einzelnen Phasen bzw. Strömen eines Versorgungsstromnetzes und/oder der Stromversorgung eine Vermutung getroffen wird, welche Phasenlage als nächstes (d. h. in einem vorausliegenden spannungsführenden Stromversorgung-Abschnitt) erwartet wird. Ist beispielsweise bekannt, dass in einem Versorgungsstromnetz die Phasendifferenz zwischen den drei Phasen jeweils 60° beträgt (oder ist ein vergleichbarer Relativversatz der Phasen der Stromversorgung bekannt) und kann mit hinreichender Sicherheit davon ausgegangen werden, dass sich die Phasen benachbarter gespeister Streckenabschnitte der Stromversorgung voneinander unterscheiden, kann beim Erreichen einer Trennstelle (zum Beispiel von einer Steuereinrichtung des Schienenfahrzeugs) die Annahme getroffen werden, dass sich die vorausliegende Phasenlage mindestens + 60° oder mindestens - 60° (bzw. um dem positiven oder negativen Betrag des Relativersatzes) von der vorangehenden Phasenlage unterscheidet. Im Fehlerfall ist allerdings auch ein Unterschied der Phasenlagen von 0° möglich. Die sekundärseitige Wechselspannung kann dann entsprechend gewählt werden, um eine primärseitige Spannung mit dieser vermuteten Phasenlage einzustellen.

Sollte eine falsche Wahl getroffen worden sein, kann die maximale Phasendifferenz von z.B. 120° (bzw. dem zweifachen des Relativersatzes) beim Einfahren in den nächsten spannungsführenden Abschnitt der Stromversorgung ggf. dennoch keine unzulässig hohen Ausgleichsströme hervorrufen. Dies gilt insbesondere dann, wenn zusätzlich die nachstehend erläuterte Last an den Haupttransformator angelegt wird, welche derartige Ausgleichsströme dämpft.

Weiter kann in diesem Zusammenhang vorgesehen sein, dass dann wenn eine Detektion der Phasenlage nach einer ersten Fehldetektion (d. h. einer nicht gelungenen Detektion der Phasenlage zum Beispiel in einer der oben geschilderten Situationen) doch noch gelingt und sich von der vermuteten Phasenlage unterscheidet, der Hauptschalter geöffnet wird. Dies kann eine Vorsichtsmaßnahme sein, um gegebenenfalls unzulässig hohe Ausgleichsströme aufgrund der unzutreffend vermuteten Phasenlage zu verhindern. Insbesondere könnte dann auch der Hauptschalter vorübergehend geöffnet werden und eine Synchronisation der primärseitigen Phasenlage mit der tatsächlich detektierten Phasenlage vorgenommen werden.

Eine weitere Ausführungsform von Verfahren und Schienenfahrzeug sieht vor, dass eine an der Primärseite eingestellte Spannung gemessen und darauf basierend die Wechselspannung an der Sekundärseite angepasst wird. Für das Messen kann eine in bekannten Schienenfahrzeugen bereits vorhandene Spannungs- und/oder Strommesseinrichtung verwendet werden, insbesondere ein sogenannter Oberspannungswandler, der die am Stromabnehmer anliegende Spannung z.B. für eine Informationsverarbeitung und elektrische Sicherheit geeignet umformt. Die Messeinrichtung kann zwischen dem Stromabnehmer und dem Hauptschalter positioniert sein. Dadurch, dass der Hauptschalter erfindungsgemäß bevorzugt geschlossen gehalten wird, kann der Oberspannungswandler auch während dem Passieren einer Trennstelle für Spannungsmessungen an der Haupttransformator-Primärseite verwendet werden. Dies mindert etwaige Umbau- oder Neuplanungskosten, insbesondere beim Umrüsten bestehender Schienenfahrzeuge zum Ausführen der erfindungsgemäßen Lösung.

Durch Messen der eingestellten Spannung an der Primärseite (Primärspannung) können unerwünschte Betriebszustände rechtzeitig detektiert werden, wie zum Beispiel Spannungsspitzen oder Resonanzeffekte. Die Wechselspannung an der Sekundärseite kann dann geeignet angepasst (insbesondere reduziert) werden, zum Beispiel durch entsprechendes Ansteuern eines die Wechselspannung erzeugenden Stromrichters. Hierfür kann wenigstens eine Steuereinrichtung des Schienenfahrzeugs verwendet werden. Insgesamt wird hierdurch die Betriebssicherheit durch Vermeiden unerwünschter Betriebszustände erhöht. Vor allem kann durch das Messen der primärseitigen Spannung aber überprüft werden, ob eine gewünschte Synchronisierung mit der detektierten vorausliegenden Phasenlage gelungen ist bzw. eine maximal zulässige Phasendifferenz hierzu nicht überschritten wird.

Allgemein hat sich gezeigt, dass dann, wenn in der nachstehend erläuterten Weise zusätzlich eine elektrische Last an den Haupttransformator angeschlossen wird (zum Beispiel in Form eines weiteren Stromrichters im Gleichrichterbetrieb), auch größere Phasendifferenzen in Kauf genommen werden können, als wenn eine solche Last nicht vorhanden ist. Die Anforderungen an die Synchronisation können also bei Zuschalten einer solchen Last geringer ausfallen bzw. es kann eine größere Phasendifferenz akzeptiert werden. Die primärseitige Phasenlage kann also neben der detektierten vorausliegenden Phasenlage auch in Abhängigkeit einer am Haupttransformator anliegenden Last eingestellt werden.

Sämtliche hierin erwähnten Komponenten und insbesondere jegliche Stromrichter und/oder die Detektionseinrichtung können über eine ausreichend übereinstimmende und insbesondere eine synchronisierte Zeitskala verfügen. Die Phasenlage kann in Bezug auf diese Zeitskala definiert sein. Beispielsweise kann diesen Komponenten ein gemeinsames Zeit-Signal (Clock-Signal) bereitgestellt werden, insbesondere über die hierin diskutierte Steuereinrichtung.

Gemäß einem weiteren Aspekt des Verfahrens und des Schienenfahrzeugs umfasst das Schienenfahrzeug ferner einen ersten Stromrichter. Dieser ist bevorzugt wahlweise als Gleichrichter zum Gleichrichten einer von dem Haupttransformator transformierten Spannung für das Versorgen eines Gleichspannungs-Zwischenkreises des Schienenfahrzeugs betreibbar ist oder als Wechselrichter zur elektrischen Energieversorgung des Haupttransformators mit Energie aus dem Gleichspannungs-Zwischenkreis. Bei diesem Aspekt umfasst das Verfahren bevorzugt folgendes:
- Betreiben des ersten Stromrichters als Wechselrichter zum Erzeugen der Wechselspannung, während das Schienenfahrzeug eine Trennstelle der Stromversorgung passiert.

Der obige Stromrichter wird hierin lediglich beispielhaft als "erster" Stromrichter bezeichnet, um ihn von einem nachstehend erläuterten optionalen "weiteren" Stromrichter zu unterscheiden. Der erste und der weitere Stromrichter können prinzipiell gleichartig ausgebildet sein, sind jedoch bevorzugt an verschiedene und insbesondere an individuell zugeordnete Sekundärwicklungen (oder anders ausgedrückt Sekundärspulen) des Haupttransformators angeschlossen.

Der erste Stromrichter kann ein sogenannter Netzstromrichter sein. Dieser zeichnet sich dadurch aus, dass er eine Sekundärspannung des Haupttransformators gleichrichtet, um einen Gleichspannungs-Zwischenkreis zu speisen. In an sich bekannter Weise und wie in Zusammenhang mit dem erfindungsgemäßen Schienenfahrzeug noch näher erläutert, kann der Gleichspannungs-Zwischenkreis allgemein wenigstens einen Hilfsbetrieb und/oder ein Bordnetz und/oder wenigstens ein Motorstromrichter und/oder (zumindest mittelbar) wenigstens einen Traktionsmotor des Schienenfahrzeugs mit elektrischer Energie speisen.

Der Stromrichter kann in an sich bekannter Weise Halbleiterschaltelemente umfassen, die zum Betreiben als Wechselrichter oder Gleichrichter geeignet angesteuert bzw. geschaltet werden können.

Zum Versorgen des ersten Stromrichters mit elektrischer Energie kann auf verschiedene elektrische Energiequellen des Schienenfahrzeugs zurückgegriffen werden. Beispielsweise kann ein aufladbarer elektrischer Energiespeicher in Form einer Batterie bereitgestellt sein.

Zusätzlich oder alternativ kann ein Traktionsmotor des fahrenden Schienenfahrzeugs als Generator betrieben werden (Stützbremsbetrieb). Die dabei erzeugte elektrische Energie kann von dem ersten Stromrichter verwendet werden, um eine Wechselspannung zu erzeugen und an die Sekundärseite des Haupttransformators anzulegen. Insbesondere kann also vorgesehen sein, während eines Passierens einer Trennstelle ein Stützbremsbetrieb zu aktivieren, um dem Gleichspannungs-Zwischenkreis Energie zuzuführen. Dieser kann dann den ersten Stromrichter speisen.

Mittels jeglicher der vorstehend genannten Energiequellen kann auch vorgesehen sein, ein Bordnetz und/oder Hilfsbetriebe der hierin geschilderten Art zu betreiben und auch beim Durchfahren einer Trennstelle weiter mit elektrischer Energie zu versorgen. Dies verbessert den Passagierkomfort, da auch beim Durchfahren einer Trennstelle Hilfsbetriebe, wie zum Beispiel eine Fahrzeugklimatisierung, eine Innenraumbeleuchtung aber auch ein Traktionsmotor-Lüfter, unterbrechungsfrei weiterbetrieben werden können.

Eine Weiterbildung des Verfahrens und des Schienenfahrzeugs sieht vor, dass während eines Passierens einer Trennstelle ein weiterer Stromrichter als Gleichrichter betrieben und von dem Haupttransformator mit elektrischer Energie versorgt wird. Dieser Stromrichter ist bevorzugt ebenfalls ein Netzstromrichter der vorstehend erläuterten Art. Der weitere Stromrichter kann über eine eigene Sekundärwicklung mit dem Haupttransformator verbunden sein, also insbesondere über eine andere Sekundärwicklung als der erste Stromrichter. Dadurch, dass er von dem Haupttransformator mit elektrischer Energie gespeist wird, bildet der weitere Stromrichter eine definierte elektrische Last. Eine Wirkleistung von mehr als 1 kW des weiteren Stromrichters kann dabei für ausreichend stabile Verhältnisse sorgen. Eine vollständige Energieversorgung eines Bordnetzes bzw. etwaiger Hilfsbetriebe über diesen Stromrichter ist zumindest in dem geschilderten Betriebszustand nicht erforderlich, da zum Beispiel auch auf einen per Stützbremsbetrieb oder Energiespeicher gespeisten Gleichspannungs-Zwischenkreis zurückgegriffen werden kann

Zusätzlich hilft das Zuschalten einer solchen Last, um die Betriebssicherheit gefährdende Resonanzen zu verhindern, die auftreten können, wenn beim Durchfahren der Trennstelle die primärseitige Spannungsversorgung abbricht. Es hat sich gezeigt, dass die Belastung durch den weiteren Stromrichter dämpfend auf derartige Resonanzen wirkt, insbesondere in Kombination mit der sekundärseitig angelegten Wechselspannung und der folglich aufrechterhaltenen Magnetisierung des Haupttransformators. Insbesondere ist es hierdurch möglich, etwaige entstehende Resonanzen zumindest teilweise zu kompensieren, die entstehen können, da Induktivitäten und parasitäre Kapazitäten innerhalb des nicht-idealen Haupttransformators eine schwingungsfähige Anordnung bilden. Diese kann beim Einfahren in einer Phasen-Trennstelle samt damit einhergehende Spannungsänderungen zu Schwingungen angeregt werden.

Alternativ oder zusätzlich kann eine definierte elektrische Last auch dadurch bereitgestellt werden, dass wenigstens ein Traktionsmotor des Schienenfahrzeugs beim Passieren der Trennstelle Traktionsenergie erzeugt, wobei die hierfür benötigte elektrische Energie von einem weiteren Traktionsmotor erzeugt wird, der im Stützbremsbetrieb betrieben wird. Dabei wird die erzeugte Energie des weiteren Traktionsmotors bevorzugt über den oben erläuterten ersten Stromrichter zur Magnetisierung des Haupttransformators verwendet (d. h. zum dortigen Anlegen einer Wechselspannung). Der zum Erzeugen von Traktionsenergie betriebene Traktionsmotor wird hingegen bevorzugt über den oben erläuterten weiteren Stromrichter vom Haupttransformators mit elektrischer Energie gespeist. Somit stellen sich die vorstehend erläuterten Vorteile infolge einer aufrechterhaltenen Magnetisierung bei einer definierten Belastung des Haupttransformators ein.

Die Erfindung betrifft auch ein Schienenfahrzeug (zum Beispiel in Form eines Verbundes aus mehreren Einzelfahrzeugen, bevorzugt mit wenigstens einer Lokomotive oder wenigstens einem Triebwagen, oder aber in Form eines Einzelfahrzeugs, insbesondere einer Lokomotive oder eines Triebwagens). Das Schienenfahrzeug weist auf:
- wenigstens einem Stromabnehmer zum Aufnehmen elektrischer Energie aus einer fahrzeugexternen Stromversorgung;
- einem Haupttransformator zum Transformieren der aufgenommenen elektrischen Energie, die an einer Primärseite des Haupttransformators bereitgestellt ist, auf ein gewünschtes Spannungsniveau an einer Sekundärseite des Haupttransformators;
- einer Detektionseinrichtung, die dazu eingerichtet ist, eine Phasenlage eines von der Stromversorgung geführten Wechselstroms zu detektieren; und
- einer Steuereinrichtung, die dazu eingerichtet ist, eine Phasenlage einer primärseitigen Spannung des Haupttransformators in Abhängigkeit der detektierten Phasenlage einzustellen.

Das Schienenfahrzeug kann jegliche Weiterbildung und jegliches weitere Merkmal umfassen, um sämtliche der vorstehenden oder nachstehenden Schritte, Betriebszustände und Funktionen bereitzustellen oder auszuführen. Insbesondere kann das Schienenfahrzeug dazu eingerichtet sein, ein Verfahren gemäß jeglichem der vorstehenden oder nachstehenden Aspekte auszuführen. Sämtliche der vorstehenden Ausführungen zu und Weiterbildungen von Verfahrensmerkmalen können auch auf die gleichlautenden Fahrzeugmerkmale zutreffen bzw. bei diesen vorgesehen sein.

Insbesondere kann das Schienenfahrzeug wenigstens einen Stromrichter (zum Beispiel einen Netzstromrichter gemäß jeglichem der vorstehenden Aspekte) und eine Steuereinrichtung umfassen, wobei die Steuereinrichtung dazu eingerichtet ist, den Stromrichter derart anzusteuern, dass dieser während des Passierens der Trennstelle als Wechselrichter betrieben wird, eine an der Sekundärseite anliegende Wechselspannung erzeugt und darüber die Phasenlage einstellt.

Die Steuereinrichtung kann als Bestandteil des Stromrichters ausgebildet bzw. räumlich mit diesem zusammengefasst sein. Weitere mögliche Varianten und Merkmale der Steuereinrichtung werden nachstehend diskutiert. Die Steuereinrichtung (oder eine andere bzw. zusätzliche Steuereinrichtung des Schienenfahrzeugs) ist bevorzugt ferner dazu eingerichtet, die folgenden Maßnahmen, allein oder in beliebiger Kombination, auszuführen oder zu veranlassen:
- Geschlossenhalten des Hauptschalters während eines Passierens einer Trennstelle, zum Beispiel durch Ausgeben eines entsprechenden Schießbefehls oder Verhindern der Ausgabe eines Öffnungsbefehls.
- Anpassen der Wechselspannung an der Sekundärseite basierend auf einer gemessenen Spannung an der Primärseite, wobei die Steuereinrichtung hierfür auf die Messergebnisse von einer Spannungsmesseinrichtung und insbesondere einem Oberspannungswandler des Schienenfahrzeugs zurückgreifen kann.
- Verändern einer Phasenlage der Spannung an der Primärseite gegenüber einer Phasenlage vor dem Passieren der Trennstelle, wofür eine sekundärseitige Wechselspannung geeignet eingestellt werden kann. Die Anpassung kann in der vorstehend erläuterten Weise derart erfolgen, dass die geänderte Phasenlage einer detektierten Phasenlage der Stromversorgung nach der Trennstelle entspricht.
- Das Schienenfahrzeug kann ferner einen ersten Stromrichter umfassen, der wahlweise als Gleichrichter zum Gleichrichten einer von dem Haupttransformator transformierten Spannung für das Versorgen eines Gleichspannungs-Zwischenkreises des Schienenfahrzeugs betreibbar ist oder als Wechselrichter zur elektrischen Energieversorgung des Haupttransformators mit Energie aus dem Gleichspannungs-Zwischenkreis. Die Steuereinrichtung kann dazu eingerichtet sein, den ersten Stromrichter als Wechselrichter zum Erzeugen einer sekundärseitigen Wechselspannung zu betreiben, während das Schienenfahrzeug eine Trennstelle der Stromversorgung passiert, und/oder diesen als Gleichrichter zu betreiben, insbesondere nach dem Passieren der Trennstelle.

Aus dem Gleichspannungs-Zwischenkreis können (bevorzugt ebenfalls unter Steuerung durch die Steuereinrichtung) Hilfsbetriebe des Schienenfahrzeugs (bspw. Lüfter, Innenraumbeleuchtung, Fahrzeugklimatisierung) über ein sogenanntes Bordnetz versorgt werden. Weiter umfasst das Schienenfahrzeug bevorzugt wenigstens einen Traktionsmotor, der ebenfalls mit Energie aus dem Gleichspannungs-Zwischenkreis angetrieben werden kann. Hierfür kann ein Motorstromrichter vorgesehen sein, der die Zwischenkreisspannung in eine für den Betrieb des Traktionsmotors geeignete Wechselspannung wandelt. Die Steuereinrichtung ist zudem bevorzugt mit der Detektionseinrichtung verbunden und erhält von dieser Signale hinsichtlich einer detektierten Phasenlage und/oder zu dem Erreichen oder nicht-Erreichen einer Trennstelle.

Als eine alternative elektrische Energiequelle für die Hilfsbetriebe, den Traktionsmotor oder aber den ersten Stromrichter, kann das Schienenfahrzeug auch wenigstens einen elektrischen Energiespeicher umfassen (zum Beispiel in Form einer Batterie). Weiter kann ein vorstehend erwähnter Stützbremsbetrieb aktiviert werden (zum Beispiel durch die Steuereinrichtung), in dem einer der Traktionsmotoren als Generator betrieben wird und zum Beispiel elektrische Energie unter Gleichrichten mittels eines Motorstromrichters in den Gleichspannung-Zwischenkreis zurückspeist.

Das Schienenfahrzeug kann auch einen ein weiteren Stromrichter umfassen, der beim Passieren einer Trennstelle als Gleichrichter betreibbar und dabei von dem Haupttransformator mit elektrischer Energie versorgbar ist. Der Stromrichter kann ebenfalls ein Netzstromrichter und wahlweise als Gleichrichter oder Wechselrichter betreibbar sein. Durch Ansteuern mittels der Steuereinrichtung kann der gewünschte Betriebsmodus eingestellt werden.

Die Steuereinrichtung kann wenigstens eine Prozessoreinrichtung umfassen, die bevorzugt wenigstens einen Mikroprozessor aufweist. Die Prozessoreinrichtung kann dazu eingerichtet sein, Programmanweisungen auszuführen, die zum Beispiel auf einer Speichereinrichtung für bevorzugt digitale Information hinterlegt sind. Hierdurch kann die Steuereinrichtung das Schienenfahrzeug dazu veranlassen, sämtliche hierin geschilderten Verfahrensschritte und Verfahrensmaßnahmen auszuführen. Insbesondere kann die Steuereinrichtung sämtliche hierin geschilderten Funktionen von ATC-Systemen ausführen oder ein solches ATC-System bereitstellen bzw. hiervon umfasst sein.

Die Steuereinrichtung kann in eine einzige Einheit oder in eine einzige übergeordnete Komponente des Schienenfahrzeugs integriert sein, wie zum Beispiel in einen Stromrichter. Die Steuereinrichtung kann auch mehrere (elektronische und/oder digitale) Steuergeräte umfassen, die im Schienenfahrzeug verteilt sind und bevorzugt jeweils wiederum eine Prozesseinrichtung umfassen. Zumindest einige der verteilten Steuergeräte sind dabei bevorzugt dazu eingerichtet, miteinander zu kommunizieren. Eines der Steuergeräte kann ein zentrales Steuergerät sein und Informationen von anderen Steuergeräten erhalten und/oder diese zum Ausführen der erfindungsgemäßen Schritte und Maßnahmen ansteuern.

Im Folgenden wird eine Ausführungsform der Erfindung anhand der beigefügten schematischen Figuren erläutert. In Ihrer Art und/oder Funktion übereinstimmende Merkmale können dabei figurenübergreifend mit den gleichen Bezugszeichen versehen sein. Es stellen dar:
- Fig. 1:: eine Ansicht eines erfindungsgemäßen Schienenfahrzeugs gemäß einer Ausführungsform der Erfindung, wobei das Schienenfahrzeug ein erfindungsgemäßes Verfahren ausführt;
- Fig. 2:: eine schematische Ansicht eines Antriebssystems des Schienenfahrzeugs aus Figur 1;
- Fig. 3:: Diagramme zum Erläutern des Verlaufs der Geschwindigkeit und der Traktionsleistung beim Passieren einer Trennstelle; und
- Fig. 4:: ein Ablaufschema eines Verfahrens, das von dem Schienenfahrzeug der Figuren 1 und 2 ausgeführt wird.

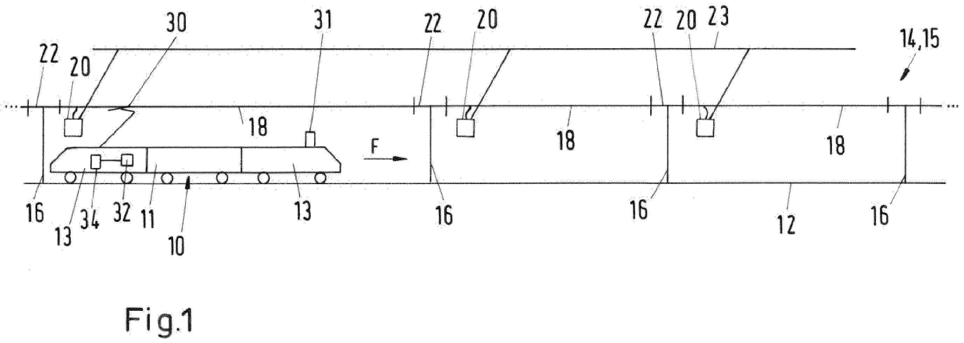

In Figur 1 ist ein Schienenfahrzeug 10 gemäß einem Ausführungsbeispiel der Erfindung gezeigt. Das Schienenfahrzeug 10 umfasst einen Verbund aus Einzelfahrzeugen im Form von einem Mittelwagen 11 und zwei Triebwagen 13. Die hierin erläuterten Komponenten des Schienenfahrzeugs 10 können prinzipiell in beliebiger Weise auf den Mittelwagen 11 und die Triebwagen 13 verteilt werden. Ebenso könnte aber auch lediglich eines der Einzelfahrzeuge 11, 13 sämtliche dieser Komponenten umfassen und ein Schienenfahrzeug 10 im Sinne dieser Offenbarung bilden.

Das Schienenfahrzeug 10 könnte auch mit einer gleichartigen Schienenfahrzeug 10 gekoppelt sein, das zum Beispiel vorausfährt. Dann könnte jedes dieser miteinander gekoppelten Schienenfahrzeuge 10 unabhängig voneinander in der nachstehend beschriebenen Weise betrieben werden.

Das Schienenfahrzeug 10 verkehrt auf einer Strecke 12, entlang derer eine Oberleitungsanlage 14 verläuft. Die Oberleitungsanlage 14 bildet eine fahrzeugexterne Stromversorgung 15. Sie umfasst in an sich bekannter Weise Masten 16, deren Abstände zueinander wie auch sämtliche weiteren Größenverhältnisse in Figur 1 nur schematisch dargestellt sind.

Zwischen den Masten 16 verlaufen spannungsführende Fahrdrahtabschnitte 18. Jeder dieser Fahrdrahtabschnitte 18 wird durch ein eigenes Unterwerk 20 gespeist, wobei jedes Unterwerk 20 aus einem übergeordneten Stromversorgungsnetz 23 (zum Beispiel aus einem Landesnetz) gespeist wird.

Im Bereich der Masten 16 sind benachbarte Fahrdrahtabschnitte 18 durch Phasen-Trennstellen 22 voneinander getrennt und genauer gesagt elektrisch voneinander isoliert. Die Phasen-Trennstellen 22 führen im gezeigten Ausführungsbeispiel keine Spannung und stellen daher neutrale Abschnitte der Stromversorgung 15 dar, in denen keine Energieaufnahme durch das Schienenfahrzeug 10 möglich ist.

Durch diesen Aufbau wird bekanntermaßen ermöglicht, dass jedes Unterwerk 20 einen zugeordneten Fahrdrahtabschnitt 18 mit einer individuellen Wechselstromphase aus dem dreiphasigen Stromversorgungsnetz 23 versorgt, um Schieflasten im Stromversorgungsnetz 23 zu vermeiden. In dem gezeigten Beispiel wechseln sich die Phasen dabei gleichmäßig ab, sodass in jedem Fahrradabschnitt 18 eine andere Phase anliegt als in dem in Fahrtrichtung F betrachtet vorausliegenden Fahrdrahtabschnitt 18.

Das Schienenfahrzeug 10 weist wenigstens eine Detektionseinrichtung 31 auf, mit der die Phase eines Fahrdrahtabschnittes 18 sensorisch erfasst werden kann. Die Detektionseinrichtung 31 ist derart positioniert, dass sie gegenüber einem Stromabnehmer 30 des Schienenfahrzeugs 10 in Fahrtrichtung F betrachtet weiter vorne liegt. Genauer gesagt ist sie um fast die gesamte Länge des Schienenfahrzeugs 10 und somit um wenigstens 50 m von dem Stromabnehmer 30 beabstandet. Insbesondere sind die Detektionseinrichtung 31 unter Stromabnehmer 30 an unterschiedlichen Enden des Schienenfahrzeugs 10 positioniert.

Der Stromabnehmer 30 ist in Kontakt mit den Fahrdrahtabschnitten 18 bringbar, um von diesen elektrische Energie aufzunehmen. Je nachdem, aus welchem Fahrdrahtabschnitt 18 das Schienenfahrzeug 10 aktuell gespeist wird, wird über den Stromabnehmer 30 ein Wechselstrom mit einer andersartigen Phase erhalten.

Es kann auch vorgesehen sein, dass das Schienenfahrzeug 10 zwei Stromabnehmer 30 und zwei Phasendetektionseinrichtungen 31 umfasst, wobei an jedem (in Fahrtrichtung F betrachtet) vorderen und hinteren Ende des Schienenfahrzeugs 10 ein Stromabnehmer 30 und eine Phasendetektionseinrichtung 31 angeordnet ist. Je nach aktueller Fahrtrichtung F wird dann bevorzugt derjenige Stromabnehmer 30 angehoben und in Kontakt mit der Stromversorgung 15 gebracht, der in Fahrtrichtung F betrachtet hinten liegt, und wird diejenige Phasendetektionseinrichtung 31 betrieben und ausgewertet, die in Fahrtrichtung F betrachtet vorne liegt.

Allgemein ermöglichen obige Positionierungen der Detektionseinrichtung 31, dass die Phase eines vorausliegenden Fahrtdrahtabschnittes 18 bereits erkannt wird, wenn sich der Stromabnehmer 30 noch im Bereich des vorangehenden Fahrtdrahtabschnittes 18 befindet oder aber innerhalb der Phasen-Trennstelle 22. Somit existiert ein Zeitvorsprung bis zum Erreichen des nächsten Fahrtdrahtabschnitts 18, innerhalb dem zum Beispiel eine Phasen-Synchronisierung der hierin erläuterten Art durchgeführt werden kann.

Während einer Fahrt in die Fahrtrichtung F passiert das Schienenfahrzeug 10 mehrere Fahrdrahtabschnitte 18 mit unterschiedlichen Wechselspannungsphasen sowie auch die dazwischenliegenden neutralen Abschnitte in Form der Phasen-Trennstellen 22. Im Bereich dieser Phasen-Trennstellen 22 ist die Energieaufnahme aus dem Landesnetz 23 bzw. der Stromversorgung 15 temporär unterbrochen.

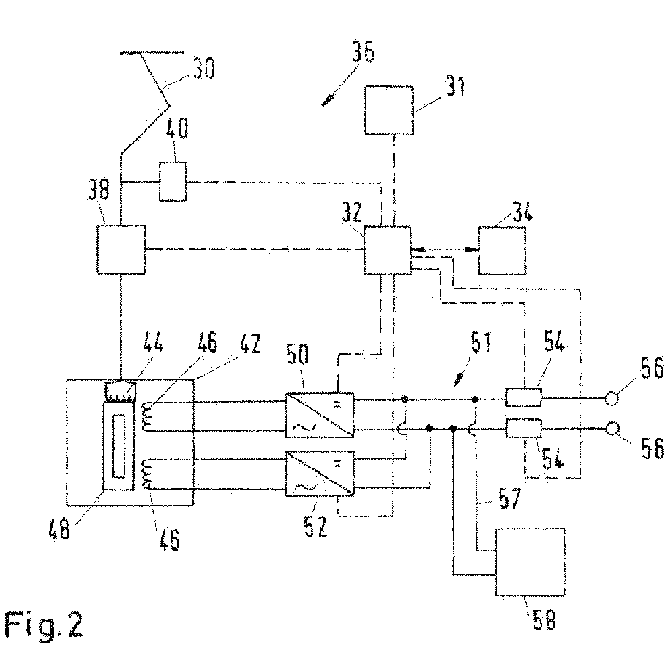

Einleitend wurde erläutert, wie sich dies bisher auf den Betrieb eines Schienenfahrzeugs 10 ausgewirkt hat und welche Maßnahmen beim Passieren von Phasen-Trennstelle 22 ergriffen wurden. Im Folgenden wird anhand von Figur 2 ein erfindungsgemäßes alternatives Vorgehen erläutert.

Figur 2 zeigt ein schematisch vereinfachtes Antriebssystem 36 des nicht näher dargestellten Schienenfahrzeugs 10 aus Figur 1. Wie erwähnt, können die Komponenten dieses Antriebssystem 36 prinzipiell auf beliebige Einzelfahrzeuge 11, 13 des Schienenfahrzeugs 10 verteilt, optional aber in einem der Triebwägen 13 zusammengefasst werden. Weiter können sämtliche der gezeigten Komponenten des Antriebsystems 36 mit der Steuereinrichtung 32 verbunden sein, um an diese Signale zu übermitteln und/oder Steuersignale von dieser zu erhalten. Dies gilt auch für die Phasendetektionseinrichtung 31 aus Figur 1.

Das Antriebssystem 36 ist elektrisch mit dem ebenfalls gezeigten Stromabnehmer 30 verbunden. Ausgehend von dem Stromabnehmer 30 wird die aufgenommene elektrische Energie über einen herkömmlichen Oberspannungswandler 40 und einen herkömmlichen Hauptschalter 38 zu einem ebenfalls herkömmlichen Haupttransformator 42 geführt. Der Hauptschalter 38 ist in bekannter Weise dazu eingerichtet, durch selektives Öffnen die elektrische Verbindung zwischen dem Stromabnehmer 30 und dem Haupttransformator 42 zu trennen.

Der Oberspannungswandler 40 kann eine anliegende Spannung und/oder einen Stromfluss messen, der primärseitig an dem Haupttransformator 42 anliegt. Der Oberspannungswandler 40 ist dabei in herkömmlicher Weise zwischen den Stromabnehmer 20 und den Hauptschalter 38 geschaltet.

Der innere Aufbau des Haupttransformators 42 ist ebenfalls stark vereinfacht dargestellt. Gezeigt sind ein Magnetkern 48 und eine Primärwicklung 44, an der eine Primärspannung anliegt. Ferner gezeigt sind Sekundärwicklungen 46, an denen eine (transformierte) Sekundärspannung anliegt. Bei der Zuordnung der Begriffe primär und sekundär wird von einem Hauptbetriebszustand des Haupttransformators 42 ausgegangen, bei dem über den Stromabnehmer 30 aufgenommene elektrische Energie primärseitig bereitgestellt ist und zur weiteren Verwendung innerhalb des Schienenfahrzeugs 10 in eine sekundärseitige Spannung gewandelt wird.

An jeder der Sekundärwicklungen 46 ist ferner ein Stromrichter angeschlossen, nämlich ein erster Stromrichter 50 und ein weiterer Stromrichter 52. Beide Stromrichter 50, 52 die auch als Netzstromrichter bezeichnet werden können, sind wahlweise als Gleichrichter oder als Wechselrichter betreibbar und mit einem Gleichspannungs-Zwischenkreis 51 verbunden. Mit diesem Gleichspannungs-Zwischenkreis 51 sind auch Traktionsmotoren 56 verbunden, die wahlweise motorisch oder generatorisch betrieben werden können. Zwischen dem Gleichspannungs-Zwischenkreis 51 und den Traktionsmotoren 56 ist jeweils ein Motorstromrichter 54 geschaltet, der wiederum wahlweise als Gleichrichter (für den generatorischen Betrieb) oder als Wechselrichter (für den motorischen Betrieb) betreibbar ist.

Mit dem Gleichspannungs-Zwischenkreis 51 sind auch nicht näher dargestellte Hilfsbetriebe 58 über ein Bordnetz 57 verbunden. Es ist auch möglich, alternativ zu der Variante aus Figur 2 die Hilfsbetriebe 58 über eine separate Sekundärwicklung 46 und unabhängig von dem Gleichspannung-Zwischenkreis 51, an den auch die Traktionsmotoren 56 angeschlossen sind, mit elektrischer Energie zu versorgen. Auch dann würde aber wenigstens ein weiterer Stromrichter 52 zwischen dieser Sekundärwicklung 56 und den Hilfsbetrieben 58 vorhanden sein und in der nachstehend erläuterten Weise betrieben werden.

Der Vollständigkeit halber sind in Figur 2 auch wieder die Steuereinrichtung 32 und die Speichereinrichtung 34 eingetragen. Ferner sind strichliert beispielhafte Kommunikationsverbindungen gezeigt, die auch über einen Fahrzeugbus bereitgestellt werden könnten. Die Steuereinrichtung 32 kann prinzipiell dazu eingerichtet sein, über die Kommunikationsverbindungen Steuersignale an jeden der erwähnten Stromrichter 50, 52, 54 und optional auch den Hauptschalter 38 auszugeben, um diese Komponenten in der hierin geschilderten Weise zu betreiben. Über den Oberspannungswandler 40 aber auch die Detektionseinrichtung 31 kann die Steuereinrichtung 32 ferner Messsignale erhalten.

Wenn der Stromabnehmer 20 mit einem spannungsführenden Fahrdrahtabschnitt 18 in Kontakt steht und der Hauptschalter 38, wie während der Fahrt allgemein der Fall, geschlossen ist, liegt die einphasige Wechselspannung der Stromversorgung 15 primärseitig an dem Haupttransformator 42 an (abzüglich hierin nicht näher betrachtete Leitungsverluste). Der Haupttransformator 42 wandelt diese Spannung in eine sekundärseitige Spannung um, die typischerweise niedriger ist.

Weiter werden in diesem Fall bevorzugt beide der Stromrichter 50, 52 als Gleichrichter betrieben und speisen den Gleichspannungs-Zwischenkreis 51 mit elektrischer Energie, die von dem Haupttransformator 42 bereitgestellt wird. Der Gleichspannungs-Zwischenkreis 51 speist die Motorstromrichter 54, die Wechselspannung für den motorischen Betrieb der Traktionsmotoren 56 erzeugen. Außerdem werden die Hilfsbetriebe 58 aus dem Gleichspannungs-Zwischenkreis 51 gespeist.

Gelangt der Stromabnehmer 30 nun in den neutralen Abschnitt einer Phasen-Trennstelle 22, würde gemäß Stand der Technik bereits im Vorfeld die Traktionskraft automatisch oder manuell gedrosselt werden, würde der Hauptschalter 38 geöffnet und würden die Stromrichter 50, 52 gesperrt werden. Dies bringt die einleitend diskutierten Nachteile mit sich.

In dem gezeigten Ausführungsbeispiel ist stattdessen vorgesehen, nach bevorzugt ebenfalls durchgeführter automatischer oder manueller Rücknahme der Traktionsleistung den Hauptschalter 38 auch beim Passieren einer Phasen-Trennstelle 22 geschlossen zu halten.

Primärseitig liegt am Haupttransformator 42 dann typischerweise keine Spannung an, wie dies beim bisherigen Öffnen des Hauptschalters 38 auch der Fall ist. Um die hiervon ausgehenden Instabilitäten des Magnetfelds des Haupttransformators 42 zu kompensieren, ist gemäß dem Ausführungsbeispiel aber bevorzugt vorgesehen, dass der erste Stromrichter 50 beim Durchfahren der Phasen-Trennstelle 22 eine Wechselspannung erzeugt, die an der entsprechenden Sekundärwicklung 46 des Haupttransformators 42 anliegt. Prinzipiell wäre dies auch bei geöffnetem Hauptschalter 38 möglich. Hierüber wird das Magnetfeld 42 zumindest teilweise definiert aufrechterhalten und wird auch eine primärseitige Spannung an der Primärwicklung 44 induziert. Wie geschildert, wird hierdurch vermieden, dass der Haupttransformator 42 seine Magnetisierung signifikant abbaut, was zu hohen Einschaltströmen bei einem Wiedereinfahren in einen spannungsführenden Fahrdrahtabschnitt 18 führen würde. Auch können hierdurch Resonanzen gedämpft werden.

Zur Energieversorgung des ersten Stromrichters 50 aus dem Gleichspannungs-Zwischenkreis 51 wird wenigstens einer der Traktionsmotoren 56 generatorisch betrieben und wandelt die Traktionsenergie des weiterrollenden Schienenfahrzeugs 10 in elektrische Energie um (Stützbremsbetrieb). Der zugeordnete Motorstromrichter 54 wird dann als Gleichrichter betrieben.

Vor allem wird durch das Anlegen der sekundärseitigen Wechselspannung aber ermöglicht, eine Phasenlage der primärseitigen Spannung einzustellen. Dies erfolgt insbesondere derart, dass diese mit einer detektierten Phasenlage in einem vorausliegenden Fahrradabschnitt übereinstimmt oder nicht über eine maximal zulässige Phasendifferenz hinaus hiervon abweicht.

Genauer gesagt wird die sekundärseitige Wechselspannung derart erzeugt, dass die primärseitige Spannung des Haupttransformators 42 mit der Phasenlage der Spannung im vorausliegenden Fahrbahnabschnitt 18 synchronisiert ist. Hierfür erhält die Steuereinrichtung 32 von der Phasendetektionseinrichtung 31 Signale betreffend eine detektierte vorausliegende Phasenlage und steuert den ersten Stromrichter 50 entsprechend an. Mittels dieser Synchronisation können hohe Ausgleichsströme beim Einfahren in den vorausliegenden Fahrdrahtabschnitt 18 verhindert werden, was aufgrund des dann noch erforderlichen Synchronisationsaufwandes auch ein Wiederherstellen der gewünschten Traktionsleistung verzögern würde oder aber zu Schutzabschaltungen führen kann.

Zusätzlich oder alternativ können hinterlegte Informationen zu den Phasenlagen in einzelnen Fahrbahnabschnitten 18 zum Beispiel aus der Speichereinrichtung 34 ausgelesen werden und kann die Steuereinrichtung 32 darauf basierend den ersten Stromrichter 50 entsprechend ansteuern. Hierfür kann die Steuereinrichtung 32 eine Ortserkennung vornehmen, zum Beispiel anhand von GPS-Signalen oder anhand von Positionsmarkierungen, wie sie von ATC-Systemen automatisch erkennbar sind. Auf diese Weise kann dann der aktuelle und/oder der vorausliegende Fahrdrahtabschnitt 18 identifiziert werden und können für diesen Fahrdrahtabschnitt 18 hinterlegte oder abrufbare Informationen zur Phasenlage ermittelt werden. Derartige Informationen können für eine Plausibilisierung der bevorzugt berührungslos per Detektionseinrichtung 31 detektierten Phasenlage verwendet werden.

Eine weitere Alternative, bei der eine vorausliegende Phasenlage lediglich vermutet wird, in der Annahme, dass diese sich von der gerade durchfahrenen Phasenlage unterscheidet, wird im allgemeinen Beschreibungsteil erläutert. Dies kommt insbesondere dann zum Tragen, wenn eine Detektion der vorausliegenden Phasenlage scheitert, während sich der Stromabnehmer 20 innerhalb der Phasen-Trennstelle 22 befindet.

Weiter ist bei diesem Ausführungsbeispiel bevorzugt vorgesehen, dass der weitere Stromrichter 52 ebenfalls nicht gesperrt wird, sondern als ein Gleichrichter betrieben und von dem Haupttransformator 42 gespeist wird. Genauer gesagt wandelt dieser weitere Stromrichter 52 eine an der zugeordneten Sekundärwicklung 46 anliegende Sekundärspannung um und speist damit den Gleichspannungs-Zwischenkreis 51. Hierüber können dann die Hilfsbetriebe 58 weiter betrieben werden, obwohl aufgrund der Phasen-Trennstelle 22 keine ausreichende Energieversorgung durch die Stromversorgung 15 vorliegt.

Bildlich gesprochen werden also die Hilfsbetriebe 58 mittels eines Energieflusses versorgt, der über ersten Stromrichter 50, den Haupttransformator 42 und den weiteren Stromrichter 52 verläuft. Hierdurch wird der Haupttransformator 42 weiter stabilisiert und werden insbesondere Resonanzen des Magnetfeldes besonders effektiv gedämpft, die aufgrund der Änderung primärseitigen Spannung 44 auftreten könnten. Vor allem werden dann aber etwaige Ausgleichsströme bei mangelnder Synchronisierung gedämpft und können höhere Phasendifferenzen zwischen der eingestellten Phasenlage und der detektierten Phasenlage akzeptiert werden.

Optional wäre es auch möglich, einen der Traktionsmotoren 56 motorisch zu betreiben, um die elektrische Last zu erhöhen, die der Haupttransformator 42 versorgen muss. Dies ist insbesondere dann relevant, wenn die elektrische Last in Form der Hilfsbetriebe 58 unterhalb einer gewünschten Mindestlast liegt. Dies kann durch die Steuereinrichtung 32 des Schienenfahrzeugs 10 überprüft und bedarfsweise aktiviert werden.

Die Auswirkungen dieses Vorgehens verdeutlichen sich aus den Diagrammen von Figur 3. In dem oberen Diagramm ist ein Geschwindigkeitsverlauf V über eine Zeitachse t aufgetragen, der bei dem Durchfahren einer Phasen-Trennstelle 22 auftritt. In dem unteren Diagramm ist ein Verlauf der Traktionsleistung T über eine Zeitachse t aufgetragen, der bei dem Durchfahren einer Phasen-Trennstelle 22 auftritt. Mit durchgezogenen Linie sind dabei jeweils die Verläufe gezeigt, die mit der erfindungsgemäßen Lösung erhalten werden. Strichliert sind Verläufe gezeigt, die mit den bisherigen Ansätzen gemäß Stand der Technik erhalten werden, bei denen das Antriebssystem 36 elektrisch abgeschaltet wird und insbesondere keine Spannungsversorgung des Haupttransformators 42 mehr erfolgt.

In dem oberen Diagramm erkennt man bezugnehmend auf die durchgezogene Linie, dass der Stromabnehmer 20 des Schienenfahrzeugs 10 zu einem Zeitpunkt T1 eine Phasen-Trennstelle 22 erreicht und ab dann die Energieaufnahme aus der Stromversorgung 15 unterbrochen ist. Die Geschwindigkeit beginnt sich daraufhin zu verringern, da automatisch per fahrerautonomer ATC-Steuerung die Traktionsleistung zurückgefahren wird. Zu einem Zeitpunkt T2 wird das Ende der Phasen-Trennstelle 22 erreicht und wird dann wieder begonnen, (ebenfalls bevorzugt per fahrerautonomer ATC-Steuerung) die Traktionsleistung hochzufahren. Das Schienenfahrzeug 10 erreicht in der Folge zum Zeitpunkt T3 wieder die ursprüngliche Geschwindigkeit vor der Phasen-Trennstelle 22. In dem Zeitraum zwischen den Zeitpunkten T1 und T2 findet dabei die auch noch nachstehend anhand des Ablaufschemas aus Figur 4 erläuterte Einstellung der primärseitigen Phasenlage statt. Da diese beim Erreichen des Endes der Phasen-Trennstelle 22 zum Zeitpunkt T3 abgeschlossen ist, kann das Schienenfahrzeug 10 entsprechend schnell wieder beschleunigt werden und werden Verzögerungen vermieden.

Eine Zustandserkennung, die das Einfahren und Ausfahren aus einer Phasen-Trennstelle 22 ermöglicht, kann mittels der Detektionseinrichtung 31 erfolgen oder aber durch Messungen mit dem Oberspannungswandler 40 aus Figur 1. Diese Komponenten können entsprechende Signale an die Steuereinrichtung 32 übermitteln, die daraufhin die geschilderten Maßnahmen einleitet. Allgemein und nicht beschränkt auf die Details des Ausführungsbeispiels kann die Steuereinrichtung 32 des Schienenfahrzeugs 10 jegliche hierin geschilderten ATC-Funktionen ausführen und/oder bereitstellen.

Im Gegensatz dazu erkennt man bei dem strichlierten Verlauf gemäß Stand der Technik, dass bereits vor dem Erreichen der Phasen-Trennstelle 22 zu einem Zeitpunkt T0 ein Geschwindigkeitsabfall eintritt, da vorausschauend der Hauptschalter 38 geöffnet wird. Zudem setzt sich die Verlangsamung bis über den Zeitpunkt T3 und das Verlassen der Phasen-Trennstelle 22 hinaus fort, da dann zunächst der Hauptschalter 38 wieder geschlossen werden muss und auch weitere einleitend geschilderte Maßnahmen vor der Wiederaufnahme einer Traktionsenergieerzeugung getroffen werden müssen. Erst zu einem deutlich späteren Zeitpunkt T5 wird deshalb wieder die ursprüngliche Geschwindigkeit erreicht. Der Zeitpunkt T5 kann auch deshalb nur verzögert erreicht werden, wenn eine primärseitige Phasenlage nicht geeignet eingestellt wurde und zunächst auftretende Ausgleichsströme die Leistungsfähigkeit des Haupttransformators 42 beeinträchtigen oder dieser zum Schutz sogar abgeschaltet werden muss.

Man erkennt also, dass die erfindungsgemäße Lösung erhebliche Vorteile hinsichtlich der Fahrdynamik bietet, da die Zeitdauer (T1-T3) ohne Traktionsenergieerzeugung deutlich kürzer ausfällt als im Stand der Technik (T0-T5). Als Konsequenz fällt auch eine minimale Geschwindigkeit (bei T2) geringer als im Stand der Technik aus (bei T4) und die ursprüngliche Geschwindigkeit wird früher wieder erreicht (siehe T3 gegenüber T5).

Im unteren Diagramm von Figur 3 sind bezugnehmend auf die gleichen Zeitpunkte T0-T4 Verläufe der vom Schienenfahrzeug 10 erzeugten Traktionsleistung T gezeigt. Zum Zeitpunkt T1 (Erreichen der Phasen-Trennstelle 22) wird bei dem erfindungsgemäßen durchgezogenen Verlauf begonnen, die Traktionsleistung T abzubauen, und zwar bevorzugt nur stufenweise bzw. graduell, um ruckhafte Verlangsamungen und das Auftreten von Überspannungen zu begrenzen. Dies wird bis zum Erreichen des Endes der Phasen-Trennstelle 22 zum Zeitpunkt T2 fortgesetzt. Ab diesem Zeitpunkt T2 wird aufgrund der geeignet eingestellten primärseitigen Phasenlage dann unmittelbar wieder begonnen, die Traktionsleistung T zu erhöhen. Die Traktionsleistung T kann auf Null oder einen deutlich reduzierten Wert zurückgefahren werden, wobei in Fig. 3 unten nur aus Darstellungsgründen ein Abstand zur unteren Achse gewahrt ist.

Bei der strichlierten Linie gemäß Stand der Technik wird erneut bereits vor dem Erreichen der Phasen-Trennstelle 22 zum Zeitpunkt T0 der Hauptschalter 38 geöffnet und daher frühzeitig begonnen, die Traktionsleistung T herunterzufahren. Erst zum Zeitpunkt T4 wird dann die Traktionsleistung wieder hochgefahren, wobei dieser Zeitpunkt T4 deutlich hinter dem Zeitpunkt T2 des Erreichens des Endes der Phasen-Trennstelle 22 liegt. Grund sind Zeitverzögerung, da das erneute Anliegen einer Spannung erkannt werden muss, anschließend der geöffnete Hauptschalter 38 erst wieder geschlossen werden muss und die vormals gesperrten Stromrichter 50, 52 dann erst wieder angetaktet werden können. Auch hieraus verdeutlicht sich der Dynamikverlust des Schienenfahrzeugs 10 beim Passieren einer Phasen-Trennstelle 22 im Vergleich zu der erfindungsgemäßen Lösung.

Abschließend wird in Figur 4 ein Ablaufschema eines erfindungsgemäßen Verfahrens unter Bezugnahme auf die Figuren 1 bis 3 erläutert. Die geschilderte Schrittfolge legt dabei keine zwingende zeitliche Reihenfolge fest, sofern nicht anders angegeben oder ersichtlich.

In einem Schritt S1 wird das Erreichen einer Phasen-Trennstelle 22 erkannt, zum Beispiel fahrerautonom durch die Steuereinrichtung 32 in Zusammenwirkung mit der Detektionseinrichtung 31 und/oder durch Messen der anliegenden Spannung mit dem Oberspannungswandler 40. Dabei kann auch der Relativabstand der Detektionseinrichtung 31 zum Stromabnehmer 30 berücksichtigt werden, um rechnerisch zu ermitteln, wann der Stromabnehmer 30 infolge der entsprechenden Detektion durch die Detektionseinrichtung 31 und unter Berücksichtigung der aktuellen Fahrzeuggeschwindigkeit in die Phasen-Trennstelle 22 gelangt.

In einem Schritt S2 wird der Hauptschalter 38 bevorzugt, aber nicht zwingend, geschlossen gehalten. Dies kann umfassen, dass die Steuereinrichtung 32 eine entsprechende Öffnungs-Signalausgabe durch andere Steuereinrichtungen unterdrückt oder dass prinzipiell keine entsprechende Öffnungs-Signalerzeugung erfolgt. Der Schritt S2 ist somit nicht zwingend mit einer tatsächlich durchgeführten Aktion verbunden.

In einem Schritt S3 wird eine Phasenlage mit der Detektionseinrichtung 31 detektiert. Aufgrund der Positionierung der Detektionseinrichtung 31 relativ zu dem Stromabnehmer 30 kann mit hinreichender Sicherheit davon ausgegangen werden, dass hierbei die Phasenlage des Stroms ermittelt wird, der in dem auf die Trennstelle 22 folgenden Fahrdrahtabschnitt 18 anliegt. Zudem würde die Detektionseinrichtung 31 innerhalb der Phasen-Trennstelle 22 erwartungsgemäß keine von null verschiedenen elektrischen Eigenschaften bestimmen, sodass das Vorliegen eines Detektionssignals an sich bereits das Vermessen des entsprechenden Fahrdrahtabschnitts18 belegt.

In einem Schritt S4 wird daraufhin der erste Stromrichter 50 als Wechselrichter betrieben (zum Beispiel unter Ansteuerung durch die Steuereinrichtung 32) und aus dem Gleichspannungs-Zwischenkreis 51 gespeist. Die erzeugte Wechselspannung liegt sekundärseitig am Haupttransformator 42 an und resultiert in einer primärseitigen Spannung, die nach Maßgabe der mit der Detektionseinrichtung 31 detektierten Phasenlage erzeugt wird. Genauer gesagt wird die Wechselspannung derart erzeugt, dass eine Phasenlage der resultierenden primärseitigen Spannung mit einer detektierten Phasenlage des vorausliegenden Fahrdrahtabschnitts 18 möglichst synchronisiert ist, d. h. übereinstimmt.

Gemäß einer Ausführungsform ist es auch möglich, zum Beispiel mit dem Oberspannungswandler 40, der aufgrund des Geschlossenhaltens des Hauptschalters 38 nach wie für ein Messen der primärseitigen Spannung verwendbar ist, die primärseitig erzeugte Spannung zu messen und den Betrieb des ersten Stromrichters 50 bzw. die hiervon erzeugte Wechselspannung geeignet anzupassen. Hierdurch kann zum Beispiel das Einstellen einer gewünschten Phasenlage der Primärspannung sichergestellt werden.

In einem Schritt S5, der auch vor oder gleichzeitig zu dem Schritt S4 ausgeführt werden kann, wird dann mit dem weiteren Stromrichter 52 in der vorstehend geschilderten Weise eine elektrische Last an den Haupttransformator 42 angelegt.

In einem Schritt S6 wird das Verlassen der Phasen-Trennstelle 22 registriert (beispielsweise erneut mit dem Oberspannungswandler 40). Der erste Stromrichter 50 wird dann wieder als Gleichrichter betrieben und die Traktionsleistung T des Schienenfahrzeugs 10 wird bevorzugt fahrerautonom hochgefahren.

Aufgrund der aufrechterhaltenen Magnetisierung des Haupttransformators 42 treten im Schritt S5 keine signifikanten Einschaltströme auf. Zudem verhindert die erfolgte Synchronisation der Phasenlage der Primärspannung mit der Phasenlage nach der Phasen-Trennstelle 22, d. h. die gezielte primärseitige Einstellung nach Maßgabe der detektierten vorausliegenden Phasenlage, hohe Ausgleichsströme. Der Haupttransformator 42 kann deshalb besonders frühzeitig wieder voll leistungsfähig sein, was Verluste der Fahrdynamik begrenzt, und Schutzabschaltungen werden vermieden. Weiter werden durch das bevorzugte Geschlossenhalten des Hauptschalters 38 Zeitverluste vermieden, die mit einem Öffnen und erneuten Schließen einhergehen würden. Auch wird der Hauptschalter 38 durch ausbleibende Öffnungs- und Schließvorgänge weniger belastet und erfährt einen geringeren Verschleiß.

## Patentansprüche

1. Verfahren zum Betreiben eines Schienenfahrzeugs (10) beim Passieren von Trennstellen (22) in einer fahrzeugexternen Stromversorgung, wobei das Schienenfahrzeug (10) umfasst:
- wenigstens einen Stromabnehmer (30) zum Aufnehmen elektrischer Energie aus der Stromversorgung (10);
- einen Haupttransformator (42) zum Transformieren der aufgenommenen elektrischen Energie, die an einer Primärseite des Haupttransformators (42) bereitgestellt ist, auf ein gewünschtes Spannungsniveau an einer Sekundärseite des Haupttransformators (42);
- eine Detektionseinrichtung (31), die dazu eingerichtet, eine Phasenlage eines von der Stromversorgung (15) geführten Wechselstroms zu detektieren;
wobei das Verfahren umfasst:
- Detektieren der Phasenlage mit der Detektionseinrichtung (31) in einem Abschnitt der Stromversorgung (15), der nach einer Trennstelle (22) liegt; und
- Einstellen der Phasenlage einer primärseitigen Spannung des Haupttransformators (42) in Abhängigkeit der detektierten Phasenlage.

2. Verfahren nach Anspruch 1,
wobei die Phasenlage eingestellt wird, während das Schienenfahrzeug (10) und insbesondere der Stromabnehmer (30) die Trennstelle (22) passiert.

3. Verfahren nach einem der vorangehenden Ansprüche,
wobei die Phasenlage der primärseitigen Spannung durch Anlegen einer sekundärseitigen Spannung an den Haupttransformator (42) eingestellt wird.

4. Verfahren nach einem der vorangehenden Ansprüche,
wobei die eingestellte Phasenlage der detektierten Phasenlage entspricht oder eine Phasendifferenz zu der detektierten Phasenlage eine zulässige Maximaldifferenz nicht überschreitet.

5. Verfahren nach einem der vorangehenden Ansprüche,
wobei die Detektionseinrichtung (31) in einem Abstand von mehr als zehn Metern zu dem Stromabnehmer (30) positioniert ist.

6. Verfahren nach Anspruch 5,
wobei die Detektionseinrichtung (31) und der Stromabnehmer (30) in unterschiedlichen Hälften des Schienenfahrzeugs (10) positioniert sind.

7. Verfahren nach einem der vorangehenden Ansprüche,
wobei das Schienenfahrzeug (10) ferner einen Hauptschalter (38) umfasst, der eingerichtet ist, bei einem Öffnen eine elektrische Verbindung zwischen dem Stromabnehmer (20) und dem Haupttransformator (42) zumindest temporär zu trennen, und wobei das Verfahren umfasst:
- Geschlossenhalten des Hauptschalters (38) während eines Passierens der Trennstelle (22).

8. Verfahren nach einem der vorangehenden Ansprüche,
wobei dann, wenn eine Detektion der Phasenlage nicht gelingt, die Phasenlage der primärseitigen Spannung in Abhängigkeit einer vermuteten Phasenlage eingestellt wird.

9. Verfahren nach den Ansprüchen 7 und 8,
wobei dann, wenn eine Detektion der Phasenlage nach einer ersten Fehldetektion doch noch gelingt und sich von der vermuteten Phasenlage unterscheidet, der Hauptschalter (38) geöffnet wird.

10. Schienenfahrzeug (10), mit:
- wenigstens einem Stromabnehmer (30) zum Aufnehmen elektrischer Energie aus einer fahrzeugexternen Stromversorgung (15);
- einem Haupttransformator (42) zum Transformieren der aufgenommenen elektrischen Energie, die an einer Primärseite des Haupttransformators (42) bereitgestellt ist, auf ein gewünschtes Spannungsniveau an einer Sekundärseite des Haupttransformators (42);
- einer Detektionseinrichtung (31), die dazu eingerichtet ist, eine Phasenlage eines von der Stromversorgung (15) geführten Wechselstroms zu detektieren; und
- einer Steuereinrichtung (32), die dazu eingerichtet ist, eine Phasenlage einer primärseitigen Spannung des Haupttransformators (42) in Abhängigkeit der detektierten Phasenlage einzustellen.
